(19)

**Europäisches Patentamt**
**European Patent Office**
**Office européen des brevets**

(11) **EP 4 721 969 A1**

(12) **EUROPEAN PATENT APPLICATION**
published in accordance with Art. 153(4) EPC

(43) Date of publication:
08.04.2026 Bulletin 2026/15

(21) Application number: 24815487.4

(22) Date of filing: 28.05.2024

(51) International Patent Classification (IPC):
**B32B 7/023** (2019.01) **B32B 27/00** (2006.01)
**B65D 65/40** (2006.01)

(52) Cooperative Patent Classification (CPC):
**B32B 7/023; B32B 27/00; B65D 65/40**

(86) International application number:
**PCT/JP2024/019567**

(87) International publication number:
**WO 2024/248005 (05.12.2024 Gazette 2024/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 29.05.2023 JP 2023087586
24.05.2024 JP 2024084927
24.05.2024 JP 2024084932
24.05.2024 JP 2024084933
24.05.2024 JP 2024084934
24.05.2024 JP 2024084937
24.05.2024 JP 2024084940

(71) Applicant: **Toppan Holdings Inc.**
**Tokyo 110-0016 (JP)**

(72) Inventors:
• **FUJII Asako**
**Tokyo 110-0016 (JP)**

• **FURUYA Takeshi**
**Tokyo 110-0016 (JP)**
• **ONO Ryusuke**
**Tokyo 110-0016 (JP)**
• **YAMAWAKI Kentaro**
**Tokyo 110-0016 (JP)**
• **SHIOHARA Mimori**
**Tokyo 110-0016 (JP)**
• **KUDO Shigeki**
**Tokyo 110-0016 (JP)**
• **TAKAYANAGI Kosuke**
**Tokyo 110-0016 (JP)**
• **TAMURA Akira**
**Tokyo 110-0016 (JP)**
• **KUME Makoto**
**Tokyo 110-0016 (JP)**
• **OSAWA Kenta**
**Tokyo 110-0016 (JP)**

(74) Representative: **TBK**
**Bavariaring 4-6**
**80336 München (DE)**

(54) **SEALANT FILM, MULTILAYER BODY, PACKAGING MATERIAL, AND PACKAGING BAG**

(57) A sealant film la includes a recycled material-containing layer 2 containing a recycled material that contains two or more types of resins, and a sealant layer 3 laminated on one main surface of the recycled material-containing layer. The recycled material-containing layer 2 includes a domain whose transmitted brightness is lower than that of the surrounding domain when the sealant film is observed in plan view, and the domain has a maximum area of 1,000 $\mu m^2$ or less and a maximum aspect ratio of 10 or less.

FIG.1

**Description**

[Technical Field]

The present invention relates to sealant films, laminates, packaging materials, and packaging bags.

[Background Art]

Generally, plastic films have properties such as being lightweight, chemically stable, easy to process, flexible, strong, and suitable for mass production, and are therefore used in a variety of applications. Their applications are diverse and include packaging materials for food and medicine, intravenous drip packs, shopping bags, posters, tape, optical films such as those used in liquid crystal display TVs, protective films, window films, greenhouses, and building materials. Specific examples of their materials include thermoplastic resins such as polyethylene, polypropylene, polystyrene, polymethylmethacrylate, polycarbonate, polyamide, polyethylene terephthalate, and polybutylene terephthalate, and thermosetting resins such as epoxy resin, polyurethane, and polyimide.

An appropriate plastic material is selected for the application, and in some cases, layers of different plastic materials are stacked to form a laminate. It is also possible to mix a plurality of plastic materials in one layer to compensate for the drawbacks of a single material. Some laminates include an aluminum foil layer to block light, a printed layer to add design to the product with an ink pattern, or an adhesive layer to bond incompatible plastic materials.

Recycling of plastic products is expected to help address recent environmental issues, and various recycling methods are being considered. For example, established technologies include mechanical recycling, in which collected PET bottles are washed, crushed, and reused as raw materials, as well as chemical recycling, in which they are converted into monomers. Furthermore, PTL 1 specified below discloses a technology relating to sealant films containing recycled polyethylene resin. The recycled resin may be collected from used molded polyethylene products or from production waste, and subjected various processes such as crushing, washing, filtration, and extraction.

On the other hand, since plastic films may contain various materials, it is difficult to reuse them as raw materials by washing and crushing alone. Specifically, because an unspecified number of resins are mixed, it is difficult to obtain uniform melt properties (fluidity), making molding difficult, and even if it were possible, the resulting mechanical strength would be insufficient.

Due to these restrictions, most plastic films are thermally recycled. However, because of the large volume of plastic films in circulation, there is strong demand for recycling them as raw materials for film products such as packaging materials.

Methods for recycling plastic films have been investigated. For example, PTL 2 specified below proposes a method for efficiently extracting EVOH (ethylene-vinyl alcohol copolymer) from a multilayer molded resin product that includes an EVOH layer serving as a gas barrier film.

[Citation List]

[Patent Literature]

PTL 1: WO 2022/124229 A

PTL 2: WO 2022/158287 A

[Summary of the Invention]

[Technical Problem]

However, the above method involves dissolving EVOH in an EVOH extractant and then recovering it by precipitation and sedimentation, but this increases labor and cost, making it difficult to regard the method as readily applicable.

PTL 1 proposes a sealant film in which an intermediate layer containing recycled polyethylene is placed between two virgin polyethylene layers made of virgin materials that have never been processed, and its deodorizing performance, concealability, and the like are evaluated. However, it does not disclose the specific structure or evaluation of a sealant film obtained using, as the recycled material, a plastic film containing various materials.

Therefore, the inventors investigated recycling of plastic films as raw materials for sealant films and found that, when different types of resins are mixed, resin components other than the resin with the highest content aggregate, which affects the smoothness and physical properties of the resulting film. If these effects significantly impair the heat-sealability or mechanical properties of the film, it would be difficult to increase the recycled plastic content in packaging materials.

The present invention has been made in consideration of the above circumstances, and aims to provide sealant films, laminates, packaging materials, and packaging bags that have sufficient heat-sealability and mechanical properties and also enable mechanical recycling of recycled materials containing two or more types of resins.

[Solution to Problem]

The present invention relates to [1] to [14] below.

[1] A sealant film including: a recycled material-containing layer containing a recycled material that contains two or more types of resins; and a sealant layer laminated on one main surface of the recycled material-containing layer, wherein the recycled material-containing layer includes a domain whose transmitted brightness is lower than that of the surrounding domain when the sealant film is observed in plan view, and the domain has a maximum area of 1,000 $\mu m^2$ or less and a maximum aspect ratio of 10 or less.

[2] The sealant film according to [1], wherein at least one of the recycled material-containing layer and the sealant layer contains a chemically recycled resin.

[3] The sealant film according to [1] or [2], wherein the sealant film contains a polyethylene-based resin derived from biomass.

[4] The sealant film according to any one of [1] to [3], wherein the sealant film is subjected to electron beam irradiation treatment.

[5] The sealant film according to any one of [1] to [4], wherein the sealant film contains inorganic particles.

[6] The sealant film according to any one of [1] to [4], wherein the recycled material-containing layer has an average brightness value of 200 or more and a standard deviation of brightness of 10 or less in HSV color space data.

[7] The sealant film according to any one of [1] to [6], wherein the sealant layer contains the same type of resin as the resin with the highest content in the recycled material-containing layer.

[8] The sealant film according to any one of [1] to [7], further including an auxiliary layer laminated on the other main surface of the recycled material-containing layer, wherein the auxiliary layer contains the same type of resin as the resin with the highest content in the recycled material-containing layer.

[9] The sealant film according to any one of [1] to [8], wherein the resin with the highest content among the two or more types of resins contained in the recycled material is a polyethylene-based resin or a polypropylene-based resin.

[10] A laminate including: the sealant film according to any one of [1] to [9]; and a gas barrier layer provided on the surface of the sealant film opposite to the sealant layer side.

[11] A laminate including: the sealant film according to any one of [1] to [9]; an adhesive layer; and a substrate film in this order.

[12] A packaging material including the sealant film according to any one of [1] to [9].

[13] The packaging material according to [12], wherein the content of plastic material contained in the recycled material is 10% or more by mass, relative to the total amount of plastic material in the packaging material.

[14] A packaging bag obtained from the packaging material according to [12] or [13].

[Advantageous Effects of the Invention]

According to the present invention, it is possible to provide sealant films, laminates, packaging materials, and packaging bags that have sufficient heat-sealability and mechanical properties and also enable mechanical recycling of recycled materials containing two or more types of resins.

[Brief Description of the Drawings]

Fig. 1 is a schematic cross-sectional view showing an embodiment of a sealant film according to the present invention.

Fig. 2 is a schematic diagram for explaining the aspect ratio of the low-transmitted-brightness domain.

Fig. 3 is a schematic cross-sectional view showing another embodiment of a sealant film according to the present invention.

Fig. 4 is a schematic cross-sectional view showing an embodiment of a laminate according to the present invention.

Fig. 5 is a schematic cross-sectional view showing another embodiment of a laminate according to the present invention.

Fig. 6 is a schematic cross-sectional view showing another embodiment of a laminate according to the present invention.

Fig. 7 is a schematic cross-sectional view showing another embodiment of a laminate according to the present invention.

Fig. 8 is a schematic cross-sectional view showing an embodiment of a packaging material according to the present invention.

Fig. 9 is a schematic cross-sectional view showing another embodiment of a packaging material according to the present invention.

Fig. 10 is a schematic cross-sectional view showing another embodiment of a packaging material according to the present invention.

Fig. 11 is a stereomicroscope photograph of the sealant film of Example 1.

Fig. 12 is a stereomicroscope photograph of the sealant film of Comparative Example 1.

[Description of the Embodiments]

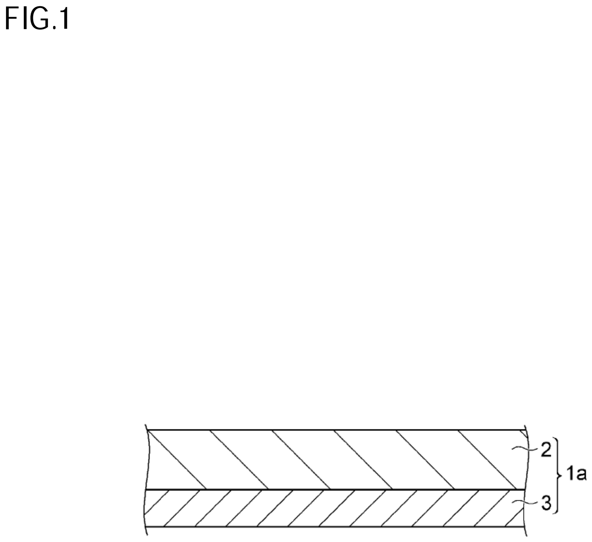

Embodiments of the present invention are described in detail below. Figs. 1 to 10 are schematic diagrams, and the size and shape of each component are appropriately exaggerated for ease of understanding. The embodiments described below are merely examples of the configurations for embodying the technical idea of the present invention, and the technical idea of the present invention should not be limited to the materials, shapes, structures, and the like of the components described below. The technical idea of the present invention can be modified in various ways within the technical scope defined by the claims.

<Sealant Film>

The sealant film of this embodiment includes a recycled material-containing layer containing a recycled material that includes two or more types of resins, and a sealant layer laminated on one main surface of the recycled material-containing layer.
Fig. 1 is a schematic cross-sectional view showing an embodiment of a sealant film. A sealant film 1a shown in Fig. 1 includes a recycled material-containing layer 2 and a sealant layer 3 laminated on one main surface of the recycled material-containing layer 2.
In the sealant film of the present embodiment, at least one of the recycled material-containing layer and the sealant layer may contain a chemically recycled resin.
Meanwhile, with growing awareness of the need to prevent global warming and reduce the use of petroleum, a finite resource, the replacement of conventional petroleum-derived plastic materials with carbon-neutral, plant-derived plastic materials is being considered. If the mass proportion of plant-derived plastics in a product meets the standard of 10% or more, it is certified with the Biomass Mark by the Japan Organics Recycling Association, and if it meets the standard of 25% or more, it is certified with the Biomass Plastic Mark by the Japan Bioplastics Association. From the perspective of increasing the biomass content in plastic-containing products such as packaging materials, there is a demand for sealant films that contain plant-derived plastics.

The sealant film of the present embodiment may contain a polyethylene-based resin derived from biomass. Such a sealant film has sufficient heat-sealability and mechanical properties, while enabling mechanical recycling of recycled materials containing two or more types of resins, and can also increase the biomass content of plastic-containing products.

There is also a demand for sealant films to have properties other than sealant properties. For example, resin films can be given a concealing function by adding inorganic particles, and such sealant films can contribute to the diversification of packaging materials.

The sealant film of the present embodiment may contain inorganic particles, the recycled material-containing layer may contain inorganic particles, or the sealant film may further include an auxiliary layer containing inorganic particles. Such a sealant film has sufficient heat-sealability and mechanical properties, while enabling mechanical recycling of recycled materials containing two or more types of resins, and can also acquire additional functions by incorporating inorganic particles.

(Recycled material-containing layer)

Examples of recycled materials that can be contained in the recycled material-containing layer include post-consumer recycled (PCR) materials, such as bottles and packaging bags for beverages, detergents, and seasonings that have been collected from the market, food containers for lunch boxes and instant noodles, packaging bags for food and garbage bags, and plastic products such as hangers, stationery, daily necessities, home appliances, and toys; and post-industry recycled (PIR) materials, such as defective items that cannot be commercialized and are discharged from factories, scraps generated during manufacturing, and plastic products used for transportation and packaging.

When the recycled material is a mechanically recycled material, it may be washed and crushed as necessary. Compared with resins obtained by chemical recycling involving, for example, thermal decomposition, mechanically recycled materials have the advantage of requiring less energy during recycling. Therefore, the greater the proportion of mechanically recycled material in the recycled material-containing layer, the smaller the environmental impact can be.

In the sealant film of this embodiment, from the perspective of mechanically recycled plastic films, it is possible to use a laminate (packaging material) obtained by bonding a plurality of types of resin sheets, a packaging bag produced using the laminate, a laminate (packaging material) obtained by bonding resin sheets of the same type, or a packaging bag produced using the laminate, or a mixture of these. Example of packaging bags include refill pouches for toiletries.

The mechanically recycled material contained in the recycled material-containing layer may be washed and crushed as necessary. Compared with resins obtained by chemical recycling involving, for example, thermal decomposition, mechanically recycled materials have the advantage of requiring less energy during recycling. Therefore, the greater the proportion of mechanically recycled material in the recycled material-containing layer, the smaller the environmental impact can be.

The recycled material contained in the recycled material-containing layer contains two or more types of resin. Examples of the two or more resins include thermoplastic resins, thermosetting resins, and cured products thereof (including crosslinked products). Note that examples of the two or more resins also include resin components (e.g., thermosetting resins) of adhesives and their cured products.

Examples of thermoplastic resins include polyolefin resin, acrylic resin, polycarbonate resin, polyester resin, and polyamide resin. Examples of thermosetting resins include epoxy resin, polyurethane resin, and polyimide resin.

Examples of polyolefin resins include polyethylene-based resins such as low-density polyethylene (LDPE), linear low-density polyethylene (LLDPE), medium-density polyethylene (MDPE), high-density polyethylene (HDPE), and ethylene-$\alpha$ olefin copolymer; and polypropylene-based resins such as homopolypropylene (PP), block polypropylene, random polypropylene, and propylene-$\alpha$ olefin copolymer.

Examples of polyester resins include polyethylene terephthalate, polybutylene terephthalate, and polylactic acid.

An example of polyamide resin is nylon 6.

The two or more resins may include a first resin that has the greatest content in the recycled material and a second resin that is immiscible with the first resin or that may form aggregates in the first resin. The types of resins contained in the recycled material-containing layer can be identified using a microscopic infrared spectrophotometer or similar equipment.

The combination of the first and second resins may be as follows.

(a) A thermoplastic resin, a thermosetting resin, and their cured products

(b) A hydrocarbon-based resin and a heteroatom-containing resin

(c) A resin that dissolves in a certain solvent and a resin that does not dissolve in the solvent

Examples of the hydrocarbon-based resin in (b) include polyolefin resins and polystyrene resins, and examples of the heteroatom-containing resin include acrylic resins, polyester resins, and polyamide resins.

Examples of the solvent in (c) include aromatic hydrocarbons and chlorinated hydrocarbons. Examples of the resin that does not dissolve in the solvent include crosslinked resins and cured thermosetting resins.

The first resin having the greatest content in the recycled material may be a polyethylene-based resin or a polypropylene-based resin from the perspective of recycling packaging bags for pouch products and the like. In that case, the second resin may be, for example, at least one of a polyester resin, a polyamide resin, and a resin component of an adhesive and its cured product.

The content of the first resin in the recycled material-containing layer may be 75 to 98% by mass, preferably 75 to 95% by mass, and more preferably 80 to 90% by mass, relative to the total mass of the recycled material-containing layer.

The content of the second resin in the recycled material-containing layer may be 2 to 33 parts by mass, preferably 5 to 33 parts by mass, and more preferably 11 to 25 parts by mass per 100 parts by mass of the first resin.

The content of recycled material in the recycled material-containing layer may be 13% or more by mass, preferably 33% or more by mass, more preferably 50% or more by mass, and even more preferably 100% by mass, relative to the total mass of the recycled material-containing layer.

The resin having the highest content in the recycled material-containing layer may be the same as the resin having the highest content in the recycled material. Such a resin may be, for example, at least one polyethylene-based resin selected from the group consisting of low-density polyethylene (LDPE), linear low-density polyethylene (LLDPE), medium-density polyethylene (MDPE), and high-density polyethylene (HDPE).

The recycled material-containing layer may contain a virgin material such as a virgin resin. The virgin material may be added so that the resin having the highest content in the recycled material is the same as the resin having the highest content in the recycled material-containing layer. For example, materials similar to the polyolefin resins mentioned above can be used as the virgin material, and it may be at least one polyethylene-based resin selected from the group consisting of low-density polyethylene (LDPE), linear low-density polyethylene (LLDPE), medium-density polyethylene (MDPE), and high-density polyethylene (HDPE).

The virgin resin may be a petroleum-derived resin or a biomass-derived resin, but from the perspective of increasing the biomass content, it is preferably a biomass-derived resin.

The recycled material-containing layer may contain a polyethylene-based resin derived from biomass. When the recycled material-containing layer contains a polyethylene-based resin derived from biomass, it is possible to achieve both a high recycling rate and a high biomass content, thereby further reducing the environmental impact.

Examples of polyethylene-based resins derived from biomass include homopolymers of plant-derived ethylene derived from bioethanol obtained from plant raw materials, and copolymers of plant-derived ethylene with other monomers.

Plant-derived ethylene can be obtained by fermenting sugar solution or starch obtained from plants such as sugarcane, corn, and sweet potato using microorganisms such as yeast to produce bioethanol, and then heating the bioethanol in the presence of a catalyst.

Plant-derived ethylene may also be obtained by fermenting sugar solution or starch obtained from inedible plants such as rice straw, sorghum, thinned wood, spent mushroom beds, and coffee grounds using microorganisms such as yeast to produce bioethanol, and then heating the bioethanol in the presence of a catalyst. By using inedible plants as raw materials, it is possible to obtain a more sustainable and environmentally friendly film that does not compete with food resources.

The biomass-derived polyethylene-based resin may also be a commercially available resin (e.g., Green PE available from Braskem).

The above polyethylene-based resins with different densities and branching levels can be obtained by appropriately selecting the polymerization method. For example, polymerization is preferably performed using a multi-site catalyst, such as a Ziegler-Natta catalyst, or a single-site catalyst, such as a metallocene catalyst, as the polymerization catalyst by gas-phase polymerization, slurry polymerization, solution polymerization, or high-pressure ion polymerization, in one or more stages.

The single-site catalyst is a catalyst capable of forming a uniform active species, and is typically prepared by contacting a metallocene or non-metallocene transition metal compound with an activating cocatalyst. Single-site catalysts are preferred because they have a more uniform active site structure than multi-site catalysts and can therefore produce polymers with high molecular weights and highly uniform structures. In particular, the single-site catalyst is preferably a metallocene catalyst. The metallocene catalyst contains the following catalytic components: a Group IV transition metal compound having a ligand with a cyclopentadienyl skeleton, a cocatalyst, an optional organometallic compound, and a carrier.

In the Group IV transition metal compound having a ligand with a cyclopentadienyl skeleton, the cyclopentadienyl skeleton refers to, for example, a cyclopentadienyl group or a substituted cyclopentadienyl group. The substituted cyclopentadienyl group has at least one substituent selected from a hydrocarbon group having 1 to 30 carbon atoms, a silyl group, a silyl-substituted alkyl group, a silyl-substituted aryl group, a cyano group, a cyanoalkyl group, a cyanoaryl group, a halogen group, a haloalkyl group, a halosilyl group, and the like. The substituted cyclopentadienyl group may have two or more substituents, and substituents may be bonded to each other to form a ring such as an indenyl ring, a fluorenyl ring, an azulenyl ring, or a hydrogenated derivative thereof. The rings formed by bonding substituents may also have substituents.

In the Group IV transition metal compound having a ligand with a cyclopentadienyl skeleton, the transition metal may be, for example, zirconium, titanium, or hafnium, and in particular, it is preferably zirconium or hafnium. The transition metal compound typically has two ligands with a cyclopentadienyl skeleton, and it is preferred that these ligands are bonded to each other via a crosslinking group. Examples of the crosslinking group include an alkylene group having 1 to 4 carbon atoms, a silylene group, a substituted silylene group such as a dialkylsilylene group or a diarylsilylene group, and a substituted germylene group such as a dialkylgermylene group or a diarylgermylene group, with a substituted silylene group being preferred. The above-mentioned Group IV transition metal compounds having a ligand with a cyclopentadienyl skeleton can be as a catalyst component used, either singly or in combination of two or more.

The term co-catalyst refers to a substance that allows the Group IV transition metal compounds to effectively function as a polymerization catalyst, or that balances the ionic charges in the catalytically activated state. Examples of the co-catalyst include benzene-soluble aluminoxanes of organoaluminum oxy compounds, benzene-insoluble organoaluminum oxy compounds, ion-exchangeable layered silicates, boron compounds, ionic compounds consisting of a cation, with or without an active hydrogen group, and a non-coordinating anion, lanthanoid salts such as lanthanum oxide, tin oxide, and phenoxy compounds with a fluoro group.

The Group IV transition metal compounds having a ligand with a cyclopentadienyl skeleton may be supported on an inorganic or organic carrier. The carrier is preferably a porous oxide of an inorganic or organic compound, and specific examples thereof include ion-exchange layered silicates such as montmorillonite, $SiO_2$, $Al_2O_3$, $MgO$, $ZrO_2$, $TiO_2$, $B_2O_3$, $CaO$, $ZnO$, $BaO$, $ThO_2$, and mixtures thereof. Examples of the optional organometallic compound additionally used as needed include organoaluminum compounds, organomagnesium compounds, and organozinc compounds. Of these, organoaluminum is preferred.

The recycled material-containing layer may contain a chemically recycled resin. In this specification, chemically recycled resin refers to a resin obtained by chemical recycling, that is, a resin produced by first decomposing discarded resin into low-molecular-weight compounds through processes such as gasification or monomerization, and then polymerizing those compounds. Chemically recycled resins contain little foreign matter because they are newly produced from raw materials obtained by chemically decomposing waste.

Any resin produced by a chemical recycling method can be used without any particular limitation. Examples of chemical recycling methods include depolymerization, thermal decomposition, gasification, coke oven chemical recycling, and the blast furnace reducing agent method. The polymerization or repolymerization method is not particularly limited, and known methods can be used.

The chemically recycled resin may be a polyolefin resin such as chemically recycled polyethylene or chemically recycled polypropylene. Such a polyolefin resin can be produced, for example, by pyrolyzing mixed waste plastics containing polyolefin resins under oxygen-free conditions, cracking the resulting pyrolysis oil (such as naphtha) to produce ethylene and propylene, and polymerizing these.

When the recycled material-containing layer contains inorganic particles, the inorganic particles can be appropriately selected according to the function to be imparted. Examples of functions to be imparted include concealability and moisture absorbency. The inorganic particles may be of the same type or of different types.

When the recycled material-containing layer is required to have concealability, white inorganic particles can be used as the inorganic particles. From the perspective of interfacial adhesion between the particle surface and the resin, examples of the inorganic particles include titanium oxide, zinc oxide, lithopone, calcium carbonate, barium sulfate, and aluminum hydroxide. Of these, titanium oxide is preferred because it has no specific absorption in the visible range and has a high refractive index.

From the perspective of dispersibility in the recycled material-containing layer, the average particle size of the inorganic particles may be 0.10 to 0.50 $\mu$m, preferably 0.15 to 0.40 $\mu$m, and more preferably 0.20 to 0.30 $\mu$m. The average particle size of the inorganic particles refers to a value measured by laser diffraction/scattering.

The content of the inorganic particles may be 0.10 to 30.00% by mass relative to the total mass of the recycled material-containing layer. When the recycled material-containing layer is required to have concealability, to achieve better concealability, the content of the inorganic particles may be 1.00% or more by mass, preferably 5.00% or more by mass, more preferably 7.00% or more by mass, and even more preferably 10.00% or more by mass, relative to the total mass of the recycled material-containing layer. In addition, to prevent a decrease in the cold impact resistance of the sealant film, the content of inorganic particles may be 23.00% or less by mass, preferably 20.00% or less by mass, more preferably 15.00% or less by mass, even more preferably 12.00% or less by mass, and still even more preferably 8.00% or less by mass.

The inorganic particles are preferably dispersed in the recycled material-containing layer. When the recycled material contains a resin having a polar group such as a hydroxyl group, an ester group, or an amide group, the dispersibility of the recycled material and inorganic particles in the recycled material-containing layer can be improved.

When imparting concealability to the sealant film, inorganic particles may be contained in the recycled material-containing layer and/or an auxiliary layer described below so that the optical density of the sealant film is 0.20 or more, preferably 0.40 or more, and more preferably 0.50 or more. The optical density can be measured using a portable transmission densitometer (Model No. 341C) manufactured by X-RITE.

The recycled material-containing layer includes domains (hereinafter also referred to as a "low-transmitted-brightness domains") with a transmitted brightness lower than that of the surrounding area when the sealant film is observed in plan view. The domain has a maximum area of 1,000 $\mu m^2$ or less and a maximum aspect ratio of 10 or less.

The maximum area and maximum aspect ratio of the low-transmitted-brightness domain are calculated as follows.

(i) Using a stereomicroscope system SZX16 (product name, manufactured by Olympus Corporation), observation images (image size: 243 $\mu m \times 851 \mu m$) of the sealant film in the planar direction are captured at 10 random locations.

(ii) The obtained 10 images are subjected to image analysis using WinROOF2021 (product name, manufactured by MITANI CORPORATION). In the image analysis, the low-transmitted-brightness domains and the surrounding high-transmitted-brightness domain are binarized to calculate the area, minimum diameter, and maximum diameter of each low-transmitted-brightness domain. In the binarization, it is possible to make the visually recognized shape of the low-transmitted-brightness domain correspond to the colored area by appropriately combining the following operations.

(a) Adjust brightness and contrast to emphasize the low-transmitted-brightness domain.

(b) Adjust the threshold to match the visually recognized low-transmitted-brightness domain with the colored area.

(c) When adjacent low-transmitted-brightness domains are recognized as one domain or when a low-transmitted-brightness domain with a hole is recognized as a plurality of domains, splitting or merging processing is performed as necessary.

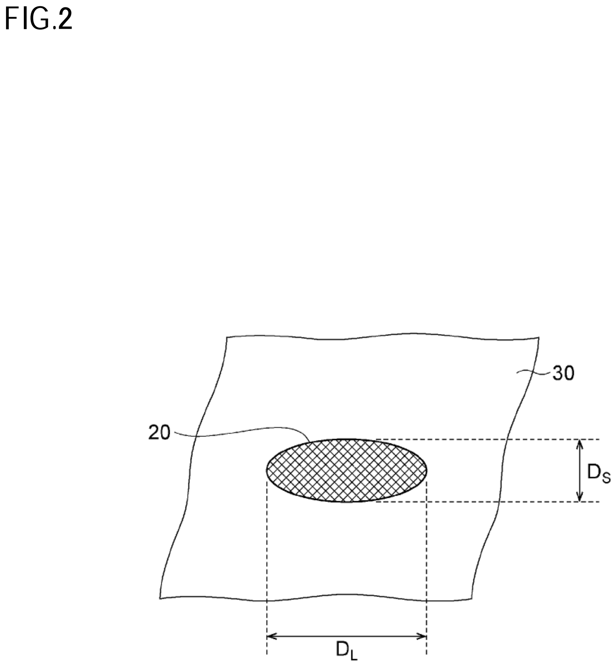

Fig. 2 is a schematic diagram for explaining the aspect ratio of the low-transmitted-brightness domain. Fig. 2 shows a low-transmitted-brightness domain 20 and a surrounding high-transmitted-brightness domain 30. The aspect ratio of the low-transmitted-brightness domain 20 represents the ratio $D_L/D_S$ of a maximum diameter (major axis) $D_L$ to a minimum diameter (minor axis) $D_S$. Note that the minimum value of the aspect ratio is 1, and the shape of the low-transmitted-brightness domain is not limited to the elliptical shape shown in Fig. 2.

When the maximum area of the low-transmitted-brightness domains identified by the above method exceeds 1,000 $\mu m^2$, that is, when there is a low-transmitted-brightness domain with a maximum area greater than 1,000 $\mu m^2$, partial swelling due to aggregation occurs on the film surface, resulting in reduced heat-sealability and mechanical properties. Furthermore, when the maximum aspect ratio of the low-transmitted-brightness domains exceeds 10, that is, when there is a low-transmitted-brightness domain with an aspect ratio greater than 10, the low-transmitted-brightness domain combines with adjacent low-transmitted-brightness domains to form a large pseudo-aggregate, resulting in the same disadvantages as when a low-transmitted-brightness domain has an area exceeding 1,000 $\mu m^2$.

From the perspective of compatibility with general manufacturing equipment and increasing the proportion of recycled material in the sealant film, the maximum area of the low-transmitted-brightness domains may be 50 $\mu m^2$ or more, preferably 200 $\mu m^2$ or more, and more preferably 400 $\mu m^2$ or more. The maximum aspect ratio of the low-transmitted-brightness domains may be 6 or more.

When films in the form of products such as pouches are used as raw materials for recycled materials, coloring components such as inks may be mixed in. In that case, if the colored portions are localized in a recycled material-containing layer, its appearance deteriorates significantly due to color unevenness, and additional steps are required to use it as a product, such as adding a white printed layer or a white layer containing a white pigment to the film. In contrast, according to the sealant film of this embodiment, even if the recycled material contains coloring components such as inks, deterioration in the appearance can be suppressed because the maximum area and maximum aspect ratio of the low-transmitted-brightness domains satisfy the above-mentioned conditions. Compared to when a sealant film is made from only virgin materials, it is possible to suppress an increase in environmental impact due to the need for materials and steps for providing the additional layer described above.

In addition, from the same perspective as above, it is preferable that the low-transmitted-brightness domains are dispersed over the entire surface of the recycled material-containing layer rather than being localized, resulting in high color uniformity.

From the same perspective as above, the recycled material-containing layer may have an average brightness value of 200 or more and a standard deviation of brightness of 10 or less in HSV color space data.

The average value and standard deviation of brightness in the HSV color space data of the recycled material-containing layer are calculated as follows.

(i) The sealant film is cut to 400 mm in the width direction ($\pm$200 mm from the center) and 250 mm in the machine direction.

(ii) The cut-out sample is scanned using a digital full-color multifunction printer MP C6503 (product name, manufactured by Ricoh Co., Ltd.) under the following scanning conditions to obtain an image.
[Scanning conditions] Type: Full-color, text/photo; Resolution: 600; Size: A3

(iii) The obtained image is analyzed using the image analysis software ImageJ, and the average brightness value and standard deviation over the entire image are calculated. The image analysis includes converting an image stored in TIF format into an HSB Stack, and obtaining the average value and standard deviation calculated from the V (brightness) histogram from the histogram analysis results of the HSV color space data. The V value ranges from 0 to 255.

From the perspective of adjusting the color when the sealant film is used as a transparent packaging material, the recycled material-containing layer may have an average brightness of 210 to 240 and a standard deviation of brightness of 6 or less.

The recycled material-containing layer may have a thickness of 20 to 80 $\mu$m.

In order to reduce the maximum area and maximum aspect ratio of the low-transmitted-brightness domains in the recycled material-containing layer, for example, the following adjustment means can be used.

(A) Reduce the proportion of the recycled material in the recycled material-containing layer.

(B) Increase the proportion of the first resin in the recycled material.

(C) If the recycled material-containing layer is extruded, increase the screw rotation speed.

(D) If the recycled material-containing layer is extruded, minimize narrowing of the flow path to reduce the applied elongational stress.

(E) Mix the recycled material with re-pelletized or virgin resin using a twin-screw extruder to form a masterbatch.

In order to increase the average brightness of the recycled material-containing layer, for example, the maximum area of the low-transmitted-brightness domain may be reduced by the above-mentioned adjusting means. In addition, in order to reduce the standard deviation of brightness of the recycled material-containing layer, for example, the resin to be mixed with the recycled material may be selected so as to increase fluidity and prevent localization of domains that form low-transmitted-brightness domains.

(Sealant layer)

Examples of the resin that forms the sealant layer include polyethylene, polypropylene, polystyrene, polymethylmethacrylate, ethylene vinyl acetate, polyvinyl alcohol, ethylene-vinyl alcohol copolymer, polyvinylidene chloride, polyacrylonitrile, polylactic acid, cyclic polyolefin, polycarbonate, polyamide, polyethylene terephthalate, polybutylene terephthalate, and derivatives thereof. These may be used singly or in combination of two or more.

The sealant layer may be made of a chemically recycled resin. The chemically recycled resin can be any of those mentioned above.

From the perspective of reducing the environmental impact, the content of the chemically recycled resin in the sealant layer is preferably 40% or more by mass, more preferably 70% or more by mass, even more preferably 90% or more by mass, and particularly preferably 100% by mass, relative to the total mass of the sealant layer.

The resin forming the sealant layer may contain a polyethylene-based resin derived from biomass. The biomass-derived polyethylene-based resin can be any of those mentioned above.

The biomass content of the biomass-derived polyethylene-based resin in the sealant layer is preferably 50% or more and 100% or less, and more preferably 70% or more and 100% or less. This increases the biomass content of the sealant film, thereby further reducing the environmental impact. The biomass content means the dry weight proportion of biomass raw materials used.

From the perspective of heat-sealability, the sealant layer may contain the same type of resin as the resin with the highest content in the recycled material-containing layer, and virgin resin and/or chemically recycled resin may be mixed to achieve this. For example, if the resin with the highest content in the recycled material-containing layer is a polyethylene-based resin, the sealant layer may contain a polyethylene-based resin, or a polyethylene-based resin may be the main component (for example, its proportion may be 95% or more by mass in the sealant layer). In that case, at least one of the recycled material-containing layer and the sealant layer, or at least one of the recycled material-containing layer, the sealant layer, and the auxiliary layer described below may contain a biomass-derived polyethylene-based resin. Furthermore, if the resin with the highest content in the recycled material-containing layer is a polypropylene-based resin, the sealant layer may contain a polypropylene-based resin, or a polypropylene-based resin may be the main component (for example, its proportion in the sealant layer may be 95% or more by mass).

From the perspective of processability during film formation, the MFR of the polyethylene-based resin may be 0.05 to 15 g/10 min, and preferably 0.1 to 8 g/10 min. The MFR here means a value measured in accordance with JIS K 7210 (190°C, load: 2.16 kg).

From the perspective of processability during film formation, the MFR of the polypropylene-based resin may be 0.05 to 20 g/10 min, and preferably 0.1 to 10 g/10 min. The MFR here means a value measured in accordance with JIS K 7210 (230°C, load: 2.16 kg).

From the perspective of heat-sealability and rigidity, the crystallinity of the polypropylene-based resin, as measured from the heat of fusion using a differential scanning calorimeter (DSC), may be 25% or more and 60% or less, and preferably 30% or more and 55% or less.

As used herein, the crystallinity of a polypropylene-based resin is calculated from the ratio of the heat of fusion $\Delta Hm$ obtained by integrating the endothermic peak during melting of the sample to the theoretical heat of fusion $\Delta H100$ of a fully crystalline body having a crystallinity of 100%, according to the following formula.

$$\text{Crystallinity } [\%] = (\Delta Hm / \Delta H100) \times 100$$

The heat of fusion $\Delta H100$ of a fully crystalline body has the value described in the following document. (For example, the heat of fusion $\Delta H100$ of polypropylene is given as 207 J/g.)

Reference: The Japan Society of Plastics Processing, Plastic Materials in Molding Processing, p. 335, Morikita Publishing Co., Ltd., 2011.

The thickness of the sealant layer may be 20 μm or more, preferably 40 μm or more, and more preferably 80 μm or more from the perspective of heat-sealability, and may be 150 μm or less, preferably 120 μm or less, and more preferably 100 μm or less from the perspective of reducing the total thickness when used as a packaging material. The thickness of the sealant layer may be 5 μm or more and 60 μm or less, 5 μm or more and 55 μm or less, 5 μm or more and 50 μm or less, 5 μm or more and 40 μm or less, 5 μm or more and 30 μm or less, 5 μm or more and 20 μm or less, 10 μm or more and 65 μm or less, 10 μm or more and 60 μm or less, 10 μm or more and 55 μm or less, 10 μm or more and 50 μm or less, 10 μm or more and 40 μm or less, 10 μm or more and 30 μm or less, 15 μm or more and 60 μm or less, or 20 μm or more and 60 μm or less.

The recycled material-containing layer and the sealant layer may contain additives such as compatibilizers, nucleating agents, reinforcing fillers, antioxidants, heat stabilizers, weathering agents, photostabilizers, plasticizers, ultraviolet absorbers, antistatic agents, flame retardants, flame retardant aids, slip agents, antiblocking agents, antifogging agents, lubricants, pigments, dyes, dispersants, copper damage inhibitors, neutralizing agents, bubble inhibitors, weld strength enhancers, natural oils, synthetic oils, and waxes, as needed. These additives may be used singly or in combination of two or more.

Examples of nucleating agents and reinforcing fillers include talc, silica, clay, montmorillonite, calcium carbonate, lithium alumina carbonate, titanium oxide, metals such as aluminum, iron, silver, and copper, hydroxides such as aluminum hydroxide and magnesium hydroxide, celluloses such as cellulose microfibrils and cellulose acetate, fibrous fillers such as glass fibers, polyethylene terephthalate fibers, nylon fibers, polyethylene naphthalate fibers, aramid fibers, vinylon fibers, and polyacrylate fibers, carbons such as carbon nanotubes, and elastomers such as ethylene propylene rubber (EPR).

Examples of antioxidants include phenolic compounds, organic phosphite compounds, and thioether compounds.

Examples of heat stabilizers and photostabilizers include hindered amine compounds.

Examples of ultraviolet absorbers include benzophenone compounds, benzotriazole compounds, benzoate series, and triazine compounds.

Examples of antistatic agents include nonionic compounds, cationic compounds, and anionic compounds.

Examples of flame retardants include halogen-based compounds, phosphorus-based compounds, nitrogen-based compounds, inorganic compounds, boron-based compounds, silicone-based compounds, sulfur-based compounds, and red phosphorus-based compounds.

Examples of the flame retardant aid include antimony compounds, zinc compounds, bismuth compounds, magnesium hydroxide, and clay silicates.

The sealant film of the present embodiment may be subjected to electron beam irradiation treatment. Electron beam irradiation increases the crosslink density of the resin contained in the sealant film, further improving its mechanical strength.

Packaging bags such as pouches are typically produced by forming a packaging material with a sealant film into a bag. However, if pinholes are formed in the packaging material of a packaging bag due to friction during transportation, outside air or components of the substrate layer may enter the packaging bag and affect the hygiene of its contents. Furthermore, when the bag contains an object with sharp corners, pinholes may be formed from the inside to the outside of the packaging bag. Therefore, it is desirable that the sealant film used as a packaging material has good puncture strength. When the sealant film of the present embodiment is subjected to electron beam irradiation treatment, it also has good puncture strength.

The electron beam irradiation treatment may be carried out from the side of the sealant film opposite to the sealant layer (in the case of a packaging material provided with a sealant film, the side opposite to the surface that comes into contact with the contents or filled material).

The sealant film of the present embodiment may be subjected to electron beam irradiation treatment during or after the formation of the laminate or packaging material described below. For example, an ink layer or an overcoat layer that is cured by electron beam irradiation may be provided on the sealant film, and the electron beam irradiation conditions may be set so that the sealant film is irradiated with a predetermined dose of electron beam when these layers are cured. In particular, in the case of multicolor printing, a further improvement in strength can be achieved by accumulating the EB irradiation of each color. Furthermore, in the case of a packaging material in which a sealant film is laminated with a gas barrier layer, a substrate film, or the like, the electron beam irradiation conditions may be set so that the sealant film is irradiated with a predetermined dose of electron beam during EB sterilization, which is carried out after pouching or filling with the contents. For improving puncture strength and other purposes, the acceleration voltage and irradiation energy of the electron beams may be preferably adjusted so that the electron beam dose applied to the sealant film is 10 KGy or more and 2,000 KGy or less, and preferably 20 KGy or more and 500 KGy or less. From a similar perspective, the electron beam dose, the acceleration voltage of the electron beams, and the irradiation energy may be adjusted so that the gel fraction of the sealant film falls within the following range.

The sealant film of the present embodiment may have a gel fraction calculated by the following method of 0.5% or more and 85% or less, and preferably 20% or more and 80% or less. The gel fraction can be used as an indicator of crosslink density. When the gel fraction is within the above range, it is possible to readily achieve both improved mechanical strength of the sealant film, through increased crosslink density of the recycled material-containing layer, and reliable heat-sealability, by preventing the sealant layer from being excessively crosslinked.

(Method of calculating gel fraction)

The gel fraction can be calculated by utilizing the fact that the crosslinked portion does not dissolve in the solvent. The sealant film is immersed in an organic solvent such as xylene, and the insoluble film that does not dissolve is dried, and its mass is measured. The gel fraction can be calculated from the mass of the sealant film before dissolution and the mass of the insoluble film after drying. Specifically, the gel fraction can be calculated as follows.

(i) First, X g of the sealant film is wrapped in Y g of stainless steel mesh, and then heated and immersed in a solvent. The heating temperature and immersion time are 120°C and 8 hours, respectively.

(ii) The sealant film wrapped in the stainless steel mesh is taken out of the solvent and dried in a vacuum. The drying temperature and drying time are 60°C and 3 hours, respectively.

(iii) The mass (Z g) of the sealant film wrapped in the stainless steel mesh after drying is measured, and the gel fraction is calculated using the following formula (1).

$$\text{Gel fraction (mass\%)} = [(Z - Y)/X] \times 100 \ ... \ (1)$$

Note that, even when the EB irradiation dose is small, the physical strength may increase by EB irradiation, and it is considered that crosslinking occurs even when the gel fraction increases only slightly. In such cases, a shift of the melting peak intensity to a lower temperature and a decrease in melting enthalpy are observed in DSC (differential scanning calorimetry) analysis.

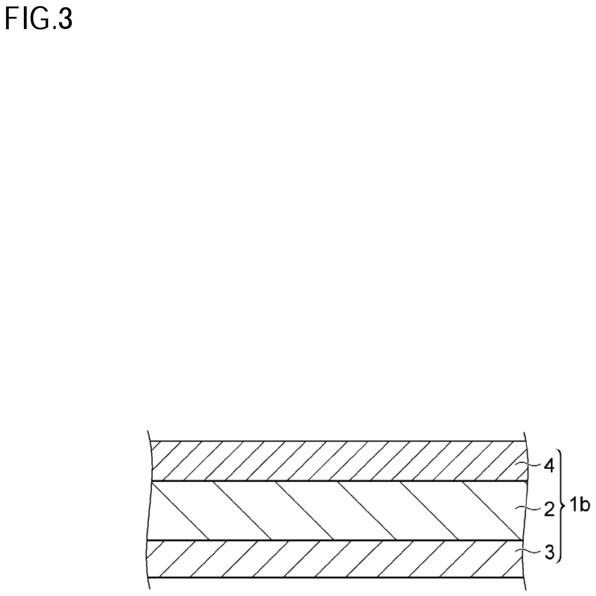

Fig. 3 is a schematic cross-sectional view showing another embodiment of a sealant film. A sealant film 1b shown in Fig. 3 includes a recycled material-containing layer 2, a sealant layer 3 laminated on one main surface of the recycled material-containing layer 2, and an auxiliary layer 4 laminated on the other main surface of the recycled material-containing layer 2. In other words, the sealant film of the present embodiment may further include an auxiliary layer laminated on the main surface of the recycled material-containing layer opposite to the side on which the sealant layer is laminated.

If the auxiliary layer 4 is intended to function as a laminate layer, it may have the same structure as the sealant layer 3 described above. To reduce environmental impact, the auxiliary layer 4 may contain a chemically recycled resin. To increase the biomass content, the auxiliary layer 4 may contain a polyethylene-based resin derived from biomass. Furthermore, the auxiliary layer 4 may contain the same type of resin as the resin with the highest content in the recycled material-containing layer 2. This allows it to readily have improved adhesion with another layer with higher lamination strength.

The auxiliary layer 4 may contain one or more of the above-mentioned additives, if necessary.

The thickness of the auxiliary layer 4 may be 20 μm or more, preferably 40 μm or more, and more preferably 80 μm or more from the perspectives of the mechanical properties and adhesion of the sealant film, and may be 150 μm or less, preferably 120 μm or less, and more preferably 100 μm or less from the perspective of reducing the total thickness when used as a packaging material.

To reduce environmental impact, the sealant film of the present embodiment may not contain petroleum-derived virgin resin. For example, in the case of the sealant film 1a shown in Fig. 1, the recycled material-containing layer 2 and the sealant layer 3 may not contain petroleum-derived virgin resin, and in the case of the sealant film 1b shown in Fig. 3, the recycled material-containing layer 2, the sealant layer 3, and the auxiliary layer 4 may not contain petroleum-derived virgin resin.

In the sealant film 1b, the electron beam irradiation treatment may be carried out from the side of the sealant film opposite to the sealant layer (the auxiliary layer side) (in the case of a packaging material provided with a sealant film, the side opposite to the surface that comes into contact with the contents or filled material). The sealant film 1b may have the above gel fraction.

<Sealant Film Manufacturing Method>

The sealant film of this embodiment can be manufactured by a known method. For example, a recycled material-containing film formed from a resin composition constituting the recycled material-containing layer can be extrusion laminated with a resin composition constituting the sealant layer, or the recycled material-containing layer and the sealant layer can be formed by co-extrusion molding.

In the former method, the recycled material-containing film can be produced by melting the resin composition that constitutes the recycled material-containing layer in an injection molding machine or an extrusion molding machine (e.g., a twin-screw extruder), and then forming the film using a T-die via a feed block or multi-manifold, or by the inflation method. The recycled material can be obtained by collecting, washing, and crushing various types of plastic waste, and pelletizing them by melt-extrusion with an extruder. Extrusion lamination can be carried out using, for example, an extrusion laminating machine.

In the latter method, for example, a sealant film can be produced by melt-kneading and co-extruding the resin compositions of the recycled material-containing layer and the sealant layer with a multilayer extrusion molding machine.

The resin composition constituting the recycled material-containing layer may contain only recycled materials, or may further contain virgin resins or additives to impart various desired properties, such as viscosity adjustment or mechanical property enhancement. Furthermore, when mixing a recycled material and a virgin resin, they may be dry-blended by simultaneously charging them into a hopper and melt-kneading them to form a film, or may be melt-blended by separately melt-kneading the virgin material and recycled material with a twin-screw extruder to form a masterbatch.

In order to reduce the maximum area and maximum aspect ratio of the low-transmitted-brightness domains in the recycled material-containing layer, its material may be re-pelletized using a twin-screw extruder, molded under high shear conditions, or mixed with an acid-modified polyolefin resin or the like as a compatibilizer.

The film can be cooled in a manner appropriate to the molding machine. For example, in the T-die method, air-cooling may be carried out by an air chamber, a vacuum chamber, or an air knife, or water-cooling may be carried by dipping a cooling roll in a cold-water pan. When imparting surface roughness by shaping, a nip roll made of processed silicone rubber, NBR rubber, fluororesin, or the like is pressed against a cooling roll made of machined metal at a pressure of 0.1 MPa or more, with molten resin supplied to the contact area and then cooled.

In this embodiment, the sealant film produced as described above can be subjected to electron beam irradiation treatment. Electron beam irradiation increases the crosslink density of the resin contained in the sealant film, thereby improving its mechanical strength. The electron beam irradiation treatment is preferably carried out from the side of the sealant film opposite to the sealant layer (in the case of a packaging material provided with a sealant film, the side opposite to the surface that comes into contact with the contents or filled material).

Furthermore, since the low-transmitted-brightness domains in the recycled material-containing layer of the sealant film produced as described above have a maximum area and maximum aspect ratio that satisfy the above-mentioned conditions, it is easier to improve the mechanical strength by electron beam irradiation treatment. When the maximum area of the low-transmitted-brightness domains identified as described above exceeds 1,000 $\mu m^2$, that is, when a low-transmitted-brightness domain has an area exceeding 1,000 $\mu m^2$, it becomes difficult to increase the crosslink density by electron beam irradiation, which in turn makes it difficult to improve the mechanical strength. Furthermore, when the maximum aspect ratio of the low-transmitted-brightness domains exceeds 10, that is, when a low-transmitted-brightness domain has an aspect ratio greater than 10, the low-transmitted-brightness domain combines with adjacent low-transmitted-brightness domains to form a large pseudo-aggregate, resulting in the same disadvantages as when a low-transmitted-brightness domain has an area exceeding 1,000 $\mu m^2$.

A known low-energy device can be suitably used to irradiate the sealant film with an electron beam. Examples thereof include a curtain-type electron beam irradiation device (LB1023, manufactured by Eye Electron Beam Co., Ltd.), a line-irradiation type low-energy electron beam irradiation device (EB-ENGINE, manufactured by Hamamatsu Photonics K.K.), and a drum-roll type electron beam irradiation device (EZ-CURE, manufactured by Eye Electron Beam Co., Ltd.).

The electron beam dose irradiated to the sealant film and the acceleration voltage of the electron beams can be set as appropriate, and may be adjusted as appropriate so that the electron beams do not reach the sealant layer when irradiated to the main surface of the sealant film opposite the sealant layer side. This makes it possible to improve the crosslink density of the sealant layer by the electron beams and prevent the heat-sealability of the sealant layer from decreasing. In addition, the electron beam dose, the acceleration voltage of the electron beams, and the irradiation energy may be adjusted so that the gel fraction of the sealant film falls within the above-mentioned range.

The electron beam dose may be 10 kGy or more and 2,000 kGy or less, and preferably 20 kGy or more and 500 kGy or less.

The acceleration voltage of electron beams may be 30 kV or more and 300 kV or less, preferably 50 kV or more and 300 kV or less, and more preferably 50 kV or more and 250 kV or less.

The electron beam irradiation energy may be 20 keV or more and 750 keV or less, preferably 25 keV or more and 500 keV or less, more preferably 30 keV or more and 400 keV or less, and even more preferably 20 keV or more and 200 keV or less.

The oxygen concentration inside the electron beam irradiation device may be 500 ppm or less, and preferably 100 ppm or less. By carrying out electron beam irradiation under such conditions, ozone generation can be suppressed and radicals generated by the irradiation can be prevented from being deactivated by atmospheric oxygen. Such conditions can be achieved, for example, by providing an inert gas (such as nitrogen or argon) atmosphere inside the device.

The sealant film may be subjected to a surface modification treatment to improve suitability for post-processing. For example, in order to improve printability or lamination suitability when it is laminated with another layer or substrate film, the surface to be laminated can be subjected to surface modification treatment. Examples of surface modification treatments include methods for oxidizing the film surface to produce functional groups, such as corona discharge treatment, plasma treatment, and flame treatment, and modification by a wet process, such as coating with an adhesion-enhancing layer.

Note that the method for producing the sealant film is not limited to the above-mentioned methods, and a sealant film formed by a molding machine may be subjected to an in-line or offline stretching treatment. The addition of other necessary steps or additives is not particularly limited.

<Laminate>

The laminate of the present embodiment includes the sealant film of the present embodiment described above.

The laminate may include, for example, the sealant film of the present embodiment and a gas barrier layer provided on the surface of the sealant film opposite to the sealant layer side.

When the film is used as a food packaging material, the film is required to have gas barrier properties. The above laminate has sufficient heat-sealability and mechanical properties, while enabling mechanical recycling of recycled materials containing two or more types of resins, and can also have gas barrier properties.

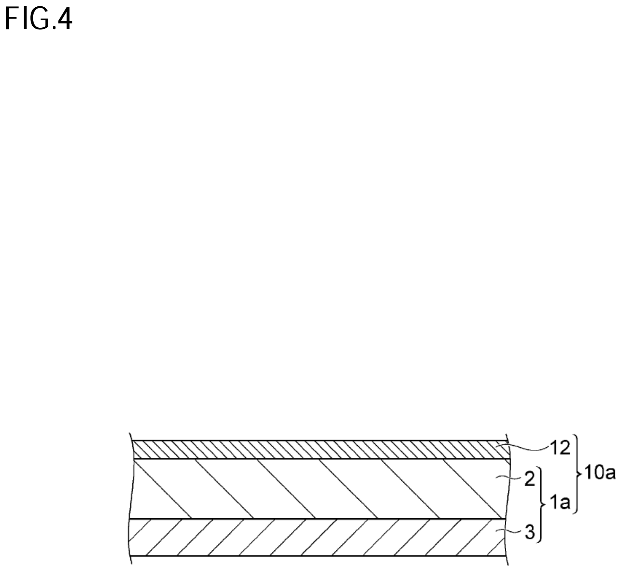

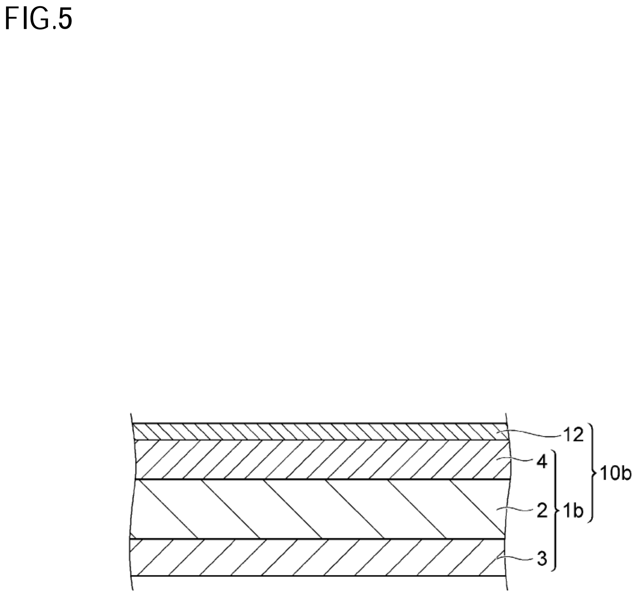

Fig. 4 is a schematic cross-sectional view illustrating an embodiment of a laminate according to the present embodiment. A laminate 10a shown in Fig. 4 includes the sealant film 1a in which the recycled material-containing layer 2 and the sealant layer 3 are laminated, and a gas barrier layer 12 provided on the recycled material-containing layer 2 of the sealant film 1a. Fig. 5 is a schematic cross-sectional view illustrating another embodiment of a laminate according to the present embodiment. A laminate 10b shown in Fig. 5 further includes the gas barrier layer 12 on the side of the auxiliary layer 4 opposite to the recycled material-containing layer 2 in the sealant film 1b shown in Fig. 5. The laminates 10a and 10b may exhibit improved gas barrier performance (e.g., oxygen barrier performance and water vapor barrier performance). The gas barrier layer may have a single-layer structure or a laminated structure.

In this embodiment, the laminate further includes a gas barrier layer, and the surface of the sealant film (in this embodiment, the surface of the recycled material-containing layer) is smooth. This enables forming a dense gas barrier layer (in particular, a dense vapor-deposited layer) with improved gas barrier performance.

The gas barrier layer can be formed by a known method on the surface of the above-described sealant film opposite to the sealant layer side (for example, the surface of the recycled material-containing layer or the auxiliary layer).

Examples of the gas barrier layer 12 include a vapor-deposited layer (vapor-deposited film) made of a metal or inorganic oxide, a metal foil such as aluminum foil, and a film of an ethylene-vinyl alcohol copolymer, a polyamide-based resin, a polyvinylidene chloride-based resin, or a polyacrylonitrile-based resin.

The vapor-deposited layer may have a single-layer structure or a laminated structure. Examples of the vapor-deposited layer include vapor-deposited layers made of metals such as aluminum, and inorganic oxides such as aluminum oxide, silicon oxide, magnesium oxide, calcium oxide, zirconium oxide, titanium oxide, boron oxide, hafnium oxide, and barium oxide.

The vapor-deposited layer can be formed using a known method. The formation method can be selected appropriately according to factors such as the material to be deposited, from physical vapor deposition methods (PVD methods) such as vacuum deposition, sputtering, and ion plating, and chemical vapor deposition methods (CVD methods) such as plasma chemical vapor deposition, thermal chemical vapor deposition, and photochemical vapor deposition.

When the vapor-deposited layer is an aluminum vapor-deposited film, its OD value may be 2 or more and 3.5 or less for better productivity, oxygen barrier performance, and water vapor barrier performance of the laminate. As used herein, the OD value refers to a value measured in accordance with JIS-K-7361.

When the vapor-deposited layer is an inorganic oxide layer obtained using silicon oxide, it may have an O/Si ratio of 1.5 or more from the perspective of transparency. In addition, the O/Si ratio may be 2.0 or less for better barrier performance. In order to more fully achieve these effects, the inorganic oxide layer may have an O/Si ratio of 1.5 or more and 2.0 or less, and preferably 1.6 or more and 1.8 or less.

The O/Si ratio of the inorganic oxide layer can be determined by X-ray photoelectron spectroscopy (XPS). For example, the measurement can be performed with an X-ray photoelectron spectrometer (manufactured by JEOL Ltd., product name: JPS-90MXV) using non-monochromated Mg Kα (1253.6 eV) as the X-ray source, with an X-ray output of 100 W (10 kV-10 mA). For quantitative analysis for obtaining the O/Si ratio, relative sensitivity factors of 2.28 for O1s and 0.9 for Si2p, respectively, can be used.

The vapor-deposited layer may have a thickness of 1 nm or more and 150 nm or less, preferably 5 nm or more and 60 nm or less, and more preferably 5 nm or more and 40 nm or less. When the thickness of the vapor-deposited layer is 1 nm or more, oxygen barrier properties and water vapor barrier properties can be easily obtained. When the thickness of the vapor-deposited layer is 150 nm or less, it becomes easier to prevent cracks from occurring in the vapor-deposited layer, and to maintain the recyclability of the sealant film.

When the gas barrier layer includes a metal foil, the thickness of the metal foil may be 1 $\mu$m or more and 15 $\mu$m or less, preferably 3 $\mu$m or more and 10 $\mu$m or less, and more preferably 5 $\mu$m or more and 8 $\mu$m or less, from the perspective of gas barrier performance and durability.

When the gas barrier layer includes a resin film, the thickness of the resin film may be 100 nm or more and 50 $\mu$m or less, preferably 500 nm or more and 10 $\mu$m or less, and more preferably 1 $\mu$m or more and 5 $\mu$m or less, from the perspective of gas barrier performance.

The gas barrier layer may also be provided by laminating an inorganic material layer formed by a method other than vapor deposition, a laminate film of a metal foil and a plastic film, or a vapor-deposited film including a plastic film and a vapor-deposited layer (vapor-deposited coating) made of the above-mentioned metal or inorganic oxide provided on the plastic film. Examples of plastic films include polyesters such as polyethylene terephthalate (PET) and polyethylene naphthalate, polyolefins such as polyethylene and polypropylene, polystyrene, polyamides such as 6-nylon, polycarbonate, polyacrylonitrile, and polyimide.

When the gas barrier layer is a resin layer having gas barrier properties, such as EVOH or polyvinyl alcohol resin, the resin layer can also be provided by co-extrusion or wet coating. When the gas barrier layer is the resin film, laminated film, or vapor-deposited film mentioned above, the gas barrier layer can be formed by lamination using an adhesive or extrusion lamination, as described below.

An auxiliary layer 4 provided with the gas barrier layer may have the same structure as the sealant layer 3 described above. When the auxiliary layer 4 contains polyolefin resin, the polyolefin resin preferably has high crystallinity from the perspectives of printability, vapor deposition suitability, strength, and heat resistance. The polyolefin resin may be virgin resin.

When the polyolefin resin is polyethylene, high-density polyethylene (HDPE) and medium-density polyethylene (MDPE) are preferred from the perspectives of vapor deposition suitability, printability, strength, and heat resistance, and MDPE is more preferred from the perspective of stretching suitability. When the polyolefin resin is polypropylene, its crystallinity determined from the heat of fusion using a differential scanning calorimeter (DSC) may be 40% or more, and preferably 45% or more from the perspectives of printability, strength, and heat resistance, and may be 60% or less, and preferably 55% or less from the perspective of impact resistance.

The proportion of resin recycled by a method other than mechanical recycling (such as virgin resin or chemical recycled resin) in the auxiliary layer 4 on which the gas barrier layer is provided can be higher than the proportion of resin recycled by a method other than mechanical recycling in the recycled material-containing layer. This makes it possible to smooth out the partial swelling on the surface of the recycled material-containing layer caused by aggregates, and also to improve the mechanical properties and gas barrier performance of the laminate.

The thickness of the auxiliary layer 4 provided with the gas barrier layer may be 20 $\mu$m or more, preferably 40 $\mu$m or more, and more preferably 80 $\mu$m or more from the perspectives of the mechanical properties and adhesion of the sealant film, and may be 150 $\mu$m or less, preferably 120 $\mu$m or less, and more preferably 100 $\mu$m or less from the perspective of reducing the total thickness when used as a packaging material.

The laminate may also include, for example, the sealant film of the present embodiment, an adhesive layer, and a substrate film in this order.

When producing packaging materials with a function such as designability or gas barrier properties, a substrate film provided with a functional layer such as a printed layer or a vapor-deposited layer may be bonded to a sealant film via an adhesive. However, if the sealant film has low smoothness, air bubbles are likely to occur in the resulting laminate, which can lead to poor appearance. The above laminate has sufficient heat-sealability and mechanical properties, and good appearance, while enabling mechanical recycling of recycled materials containing two or more types of resins.

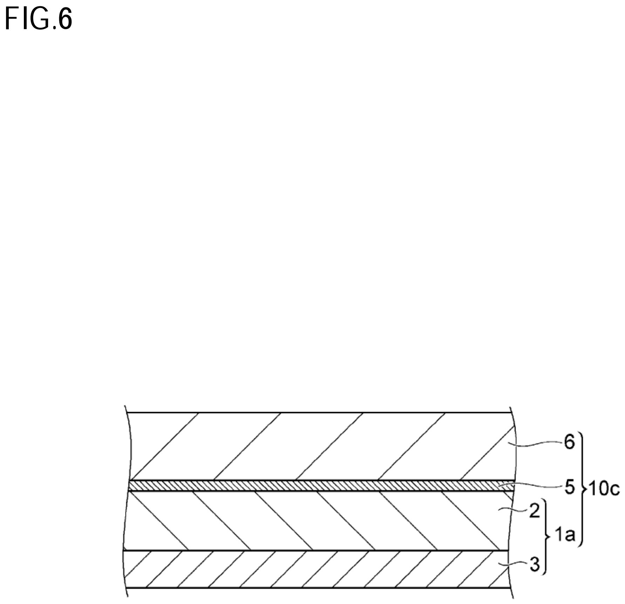

Fig. 6 is a schematic cross-sectional view of an example of the above laminate. A laminate 10c shown in Fig. 6 includes the sealant film 1a in which the recycled material-containing layer 2 and the sealant layer 3 are laminated, and a substrate film 6 laminated on the recycled material-containing layer 2 of the sealant film 1a via an adhesive layer 5.

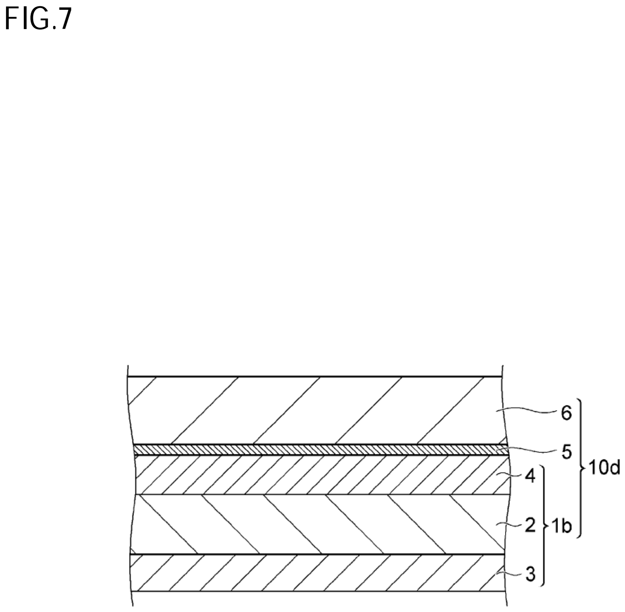

Fig. 7 is a schematic cross-sectional view of another example of the above laminate. A laminate 10d shown in Fig. 7 includes the sealant film 1b shown in Fig. 3 and the substrate film 6 laminated on the auxiliary layer 4 in the sealant film 1b via an adhesive layer 5.

The auxiliary layer 4 in the laminate may further have a gas barrier layer provided on the side opposite to the recycled material-containing layer 2 side. Then, the laminate may exhibit improved gas barrier performance (e.g., oxygen barrier performance and water vapor barrier performance). The gas barrier layer may have a single-layer structure or a laminated structure.

The adhesive layer 5 functions as a layer that bonds the substrate film 6 and the sealant film. For example, in the laminate 10c, the recycled material-containing layer 2 of the sealant film and the substrate film 6 are bonded via the adhesive layer 5, and in laminate 10d, the auxiliary layer 4 of the sealant film and the substrate film 6 are bonded via the adhesive layer 5.

The laminates shown in Figs. 6 and 7 can be used as packaging materials.

The substrate film 6 is not particularly limited as long as it has mechanical strength and dimensional stability, and examples thereof include plastic film, paper, and nonwoven fabric. Examples of the material of a plastic film include polyesters such as polyethylene terephthalate (PET) and polyethylene naphthalate, polyolefins such as polyethylene and polypropylene, polystyrene, polyamides such as 6-nylon, polycarbonate, polyacrylonitrile, and polyimide.

The substrate film 6 is preferably a stretched film from the perspectives of mechanical strength and dimensional stability.

When the substrate film 6 contains the same type of resin (also referred to as "the same resin") as the resin with the highest content in the sealant film, a mono-material packaging material as a whole can be obtained, improving its recyclability. In that case, all layers constituting the sealant film (e.g., the sealant layer, or the sealant layer and the auxiliary layer) may contain the same type of resin as the resin with the highest content in the recycled material-containing layer.

The content of the same resin in the laminate (or the packaging material described below) may be 90% or more by mass, relative to the total amount of the laminate (or packaging material). Then, the laminate (or packaging material) can be regarded as a packaging material made of a single material (mono-material). In order to further improve recyclability, the content of the same resin in the laminate (or packaging material) may be preferably 92.5% or more by mass, and more preferably 95% or more by mass, relative to the total amount of the laminate (or packaging material).

From the perspective of transparency, the haze value of the substrate film 6 may be 30% or less, and preferably 20% or less. As used herein, the haze value of a film refers to a value measured in accordance with JIS K 7105.

The substrate film 6 may be subjected to surface treatment. This improves adhesion to the adjacent layer. Examples of surface treatment methods include physical treatments such as corona discharge treatment, ozone treatment, low-temperature plasma treatment using oxygen gas and/or nitrogen gas, and glow discharge treatment; as well as chemical treatments such as oxidation treatment using chemicals.

An anchor coat layer may be provided on the surface of the substrate film 6 using a known anchor coat agent.

The thickness of the substrate film 6 may be 10 $\mu$m or more and 50 $\mu$m or less, and preferably 12 $\mu$m or more and 30 $\mu$m or less. When the thickness of the substrate film is 10 $\mu$m or more, the strength of the laminate (or packaging material) can be easily improved. Furthermore, when the thickness of the substrate is 50 $\mu$m or less, the processability of the laminate (or packaging material) can be easily maintained.

The adhesive constituting the adhesive layer 5 is not particularly limited, but a dry lamination adhesive or an adhesive of the solvent-free type (also called a "solvent-free adhesive") can be used. Examples of dry lamination adhesives include two-component urethane adhesives, polyester urethane adhesives, polyether urethane adhesives, acrylic adhesives, polyester adhesives, polyamide adhesives, and epoxy adhesives.

When the packaging material is used for a retort packaging bag, a retort resistant two-component urethane adhesive can be used.

Examples of solvent-free adhesives include two-component polyurethane adhesives prepared by reacting a curing agent made of a bifunctional or higher functional aromatic or aliphatic isocyanate compound with a base resin such as polyester polyol, polyether polyol, or acrylic polyol. Such adhesives react and cure upon heating or the like (e.g., the hydroxyl groups of the base resin react with the isocyanate groups of the curing agent), thereby forming an adhesive layer. In this case, the adhesive layer can also be regarded as an adhesive layer made of the cured product of a solvent-free adhesive (also referred to as a "solvent-free adhesive layer").

In order to improve adhesiveness, for example, in the solvent-free adhesive, the equivalent ratio of isocyanate groups in the curing agent to the hydroxyl groups in the base resin (NCO group/OH group molar ratio) may be 0.5 to 5. Whether the adhesive layer is formed using a solvent-free adhesive rather than a solvent-based adhesive can be analyzed by, for example, Fourier transform infrared spectroscopy.

For improved appearance of the laminate, the adhesive constituting the adhesive layer may be a solvent-free adhesive. In the case where a substrate film and a sealant film are bonded using a dry lamination adhesive, typically, the adhesive is dissolved in a solvent and applied to the substrate film, and then the solvent is removed in a drying oven before the sealant film is bonded. Dry lamination adhesives are hard after the solvent has been removed and have little freedom in deformation, whereas solvent-free adhesives have a high degree of freedom in deformation upon adhesion, which allows them to better conform to the surface shape of a sealant film with an uneven surface. Therefore, a solvent-free adhesive layer formed using a solvent-free adhesive is less likely to contain bubbles caused by voids between the substrate film and the sealant film, and adhesion can also be improved.

Meanwhile, solvent-free adhesives place less environmental burden during manufacture and can be applied more thinly than solvent-based adhesives. Therefore, an adhesive layer formed with a solvent-free adhesive tends to be thin. In the laminate of this embodiment, when an adhesive layer formed with a solvent-free adhesive is combined with the sealant film of this embodiment, which has sufficiently small surface irregularities, high adhesive strength can be obtained with a smaller amount of adhesive applied, and a good appearance can be obtained with reduced bubble generation.

From the perspective of environmental consideration, the adhesive layer 5 may satisfy at least one of the following conditions.

(1) Does not contain 3-glycidyloxypropyltrimethoxysilane (GPTMS).

(2) Contains a biomass material.

(3) Does not contain a solvent.

The adhesive layer 5 may be chlorine-free from the perspective of suppressing discoloration of the recycled resin after recycling and the generation of odors due to heat treatment.

The adhesive layer may have a thickness of 0.3 $\mu$m or more and 5.0 $\mu$m or less. The thickness of the adhesive layer may be 0.3 $\mu$m or more, preferably 0.5 $\mu$m or more, and more preferably 1 $\mu$m or more from the perspective of adhesive strength, and may be 5.0 $\mu$m or less, preferably 3.5 $\mu$m or less, and more preferably 2.5 $\mu$m or less from the perspective of recyclability. When the thickness of the adhesive layer is smaller than or equal to the above upper limit, the mono-material content in the packaging material can be increased.

<Packaging Material>

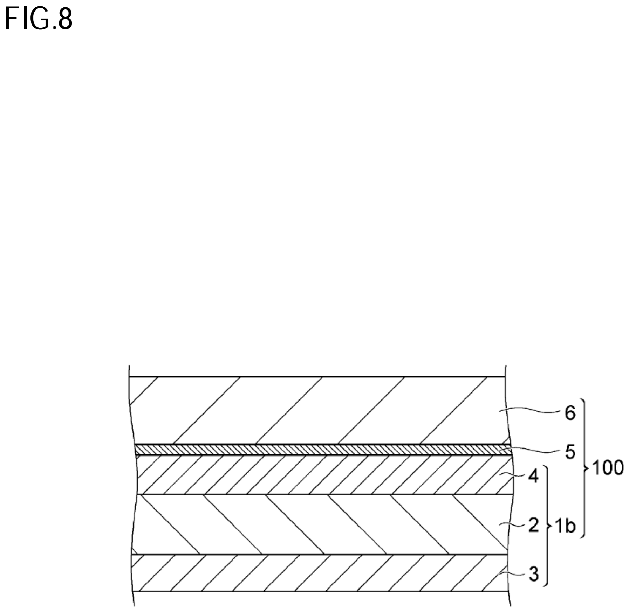

The packaging material of the present embodiment includes the sealant film of the present embodiment described above. Fig. 8 is a schematic cross-sectional view of an embodiment of a packaging material. A packaging material 100 shown in Fig. 8 includes the sealant film 1b provided with the auxiliary layer 4, and the substrate film 6 laminated onto the auxiliary layer 4 via the adhesive layer 5.

The adhesive layer 5 bonds the substrate film 6 and the sealant film. In the packaging material 100, the auxiliary layer 4 of the sealant film and the substrate film 6 are bonded via the adhesive layer 5.

The packaging material according to this embodiment may further include functional layers such as a printed layer and a gas barrier layer. These functional layers may be provided on the substrate film mentioned above.

The printed layer may be formed on the surface of the substrate film on which the sealant film is provided. This prevents the printed layer from coming into contact with the outside air and deteriorating over time.

The printed layer may represent letters, patterns, symbols, or a combination thereof.

From the perspective of producing a packaging material with less environmental impact, the printed layer may be formed using ink derived from biomass.

The method for forming the printed layer is not particularly limited, and any known printing method such as gravure printing, offset printing, or flexographic printing can be used. Of these, flexographic printing may be used from the perspective of environmental impact.

The gas barrier layer can be provided on the substrate film and may have the same structure as the gas barrier layer 12 described above.

The gas barrier layer may also be provided by laminating a laminate film of a metal foil and a plastic film, or a vapor-deposited film including a plastic film and a vapor-deposited layer (vapor-deposited coating) made of the above-mentioned metal or inorganic oxide provided on the plastic film. Examples of plastic films include polyesters such as polyethylene terephthalate (PET) and polyethylene naphthalate, polyolefins such as polyethylene and polypropylene, polystyrene, polyamides such as 6-nylon, polycarbonate, polyacrylonitrile, and polyimide.

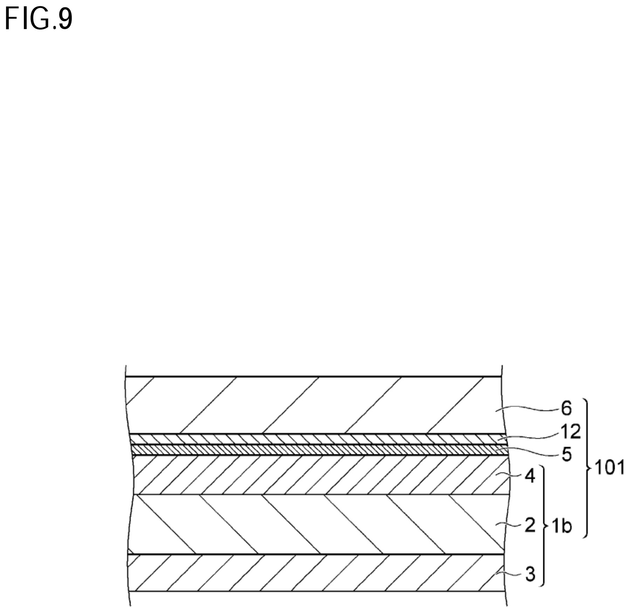

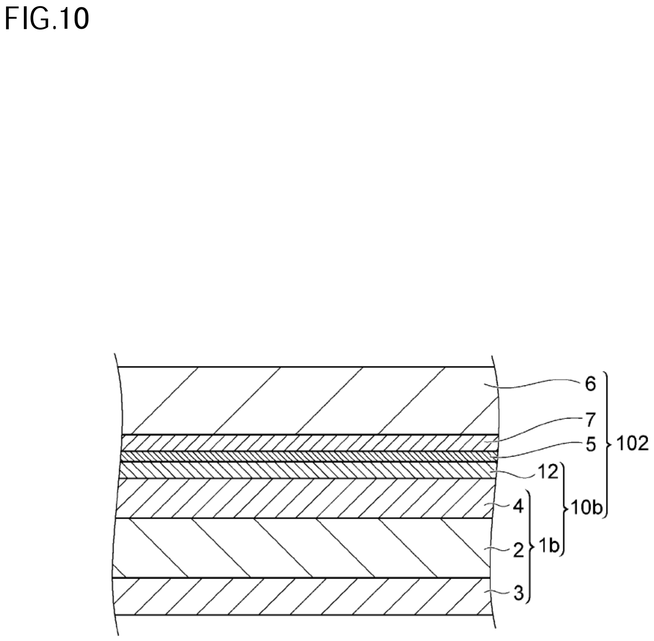

Figs. 9 and 10 are schematic cross-sectional views of other embodiments of packaging materials.

A packaging material 101 shown in Fig. 9 includes the sealant film 1b provided with the auxiliary layer 4, and a substrate film 6 that has the gas barrier layer 12 and is laminated on the auxiliary layer 4 via the adhesive layer 5.

The packaging material 102 shown in Fig. 10 includes the laminate 10b in which the sealant film 1b, having a laminate structure of the sealant layer 3, recycled material-containing layer 2, and auxiliary layer 4, and the gas barrier layer 12 are laminated in this order, and a substrate film 6 having a printed layer 7 bonded via the adhesive layer 5 to the gas barrier layer 12 side of the laminate. In the packaging material 102, as described above, the printed layer 7 is formed on the surface of the substrate film 6 on which the sealant film is provided.

Each layer in the packaging material of this embodiment may contain the additives described above.

The packaging material of this embodiment can be modified in various ways in addition to the configurations described above, and may have the following configurations.

(a) Sealant film of the present embodiment/adhesive layer/gas barrier film/adhesive layer/substrate film

(b) Sealant film of the present embodiment/adhesive layer/gas barrier film

(c) Sealant film of the present embodiment/gas barrier layer (e.g., vapor-deposited layer)/adhesive layer/substrate film

The gas barrier film may be a substrate film provided with a gas barrier layer, a laminated film of a metal foil and a plastic film, or a vapor-deposited film, as described above, or may be a metal foil such as aluminum foil, or a film made of an ethylene-vinyl alcohol copolymer, a polyamide-based resin, a polyvinylidene chloride-based resin, a polyacrylonitrile-based resin, or the like.

Alternatively, the packaging material may include a sealant film having an auxiliary layer, a first substrate film laminated onto the auxiliary layer via an adhesive layer, and a second substrate film having a printed layer laminated onto the first substrate film via an adhesive layer.

From the perspective of mechanical recycling, in the packaging material of this embodiment (or the laminate of this embodiment), the content of plastic material contained in the recycled material may be 10% or more by mass, and preferably 25% or more by mass, relative to the total amount of plastic material in the packaging material (or laminate). When the packaging material of this embodiment is a laminated packaging material, materials other than plastic (e.g. adhesives, printing inks, and aluminum foil) may be excluded from the weight calculation.

Examples of the plastic material contained in the recycled material (so-called recycled plastic) include the resins contained in the recycled material contained in the recycled material-containing layer according to the present embodiment described above. The weight of pre-consumer materials in recycled plastic may be calculated by multiplying by 1/2.

The packaging material (or laminate) of this embodiment can be used for stand-up pouches, three-sided bags, two-sided bags, gusseted bags, pouches with spouts, pouches with beaks, and the like.

<Packaging Bag>

The packaging bag of the present embodiment is made from the packaging material of the present embodiment described above. The bag style of the packaging bag is not particularly limited, but the packaging bag may be a stand-up pouch, a three-sided bag, a fin seal bag, a gusseted bag, a pouch with a spout, a pouch with a beak, or the like.

Examples

The present invention is described in detail below with reference to Examples; however, the present invention is not limited thereto.

<Preparation of Mechanically Recycled Material>

(Recycled material 1)

A film in which an LLDPE film (manufactured by Mitsui Chemicals Tohcello, Inc.) under the product name "TUX FC-S", film thickness: 100 $\mu$m), an adhesive layer, a PET film (manufactured by Toray Advanced Film Co., Ltd. under the product name "VM-PET 1310", film thickness: 12 $\mu$m, aluminum vapor deposition), an adhesive layer, a printed layer, and an Ny film (manufactured by Toyobo Co., Ltd. under the product name "Harden Film N1100", film thickness: 15 $\mu$m) were laminated in this order was compressed, cut, and granulated to obtain a recycled material 1. The adhesive layer was formed by dry lamination using an adhesive mixture of DIC DRY LX-500 (product name, manufactured by DIC Graphics) as the base resin, KW 75 (product name, manufactured by DIC Graphics) as the curing agent, and NC 401 (product name, manufactured by Toyo Ink) as the solvent.

(Recycled material 2)

A film in which a PP film (manufactured by Toray Advanced Film Co., Ltd. under the product name "Torayfan NO ZK207", film thickness: 100 $\mu$m), an adhesive layer, a PET film (manufactured by Toray Advanced Film Co., Ltd. under the product name "VM-PET 1310", film thickness: 12 $\mu$m, aluminum vapor deposition), an adhesive layer, a printed layer, and an Ny film (manufactured by Toyobo Co., Ltd. under the product name "Harden Film N1100", film thickness: 15 $\mu$m) were laminated in this order was compressed, cut, and granulated to obtain a recycled material 2. The adhesive layers were formed in the same manner as in the recycled material 1.

(Recycled material 3)

A film in which an LLDPE film (manufactured by Mitsui Chemicals Tohcello, Inc.) under the product name "TUX FC-S", film thickness: 100 $\mu$m), an adhesive layer, an HDPE film (manufactured by Tamapoly Co., Ltd. under the product name "HF31", film thickness: 35 $\mu$m), an adhesive layer, a printed layer, and an HDPE film (manufactured by Tamapoly Co., Ltd. under the product name "HF31", film thickness: 35 $\mu$m) were laminated in this order was compressed, cut, and granulated to obtain a recycled material 3. The adhesive layers were formed in the same manner as in the recycled material 1.

<Preparation of Chemically Recycled Resin>

(CR-PE)

Chemically recycled polyethylene (density: 0.94 g/cm$^3$, MFR: 1.0 g/10 min) was obtained by polymerizing ethylene produced from naphtha obtained by oxygen-free pyrolysis of waste plastics.

(CR-PP)

Chemically recycled polypropylene (crystallinity: 48%, MFR: 1.2 g/10 min) was obtained by polymerizing propylene produced from naphtha obtained by oxygen-free pyrolysis of waste plastics.

<Preparation of Polyethylene-based Resin Derived from Biomass>

(Biomass LLDPE)

A biomass-derived LLDPE "SLL118" (product name, manufactured by Braskem, density: 0.916 g/cm$^3$, MFR: 1.3 g/10 min, biomass content: 87%) was prepared.

<Preparation of Inorganic Particles>

(Inorganic particles 1)

Titanium oxide (titanium oxide PEONY HP WHITE series, manufactured by DIC Corporation, model number: L-11232-MPT) was prepared as inorganic particles.

<Sealant Film Preparation A>

(Example A1)

The recycled material 1 and an LLDPE (manufactured by Prime Polymer Co., Ltd. under the product name "Evolue SP2040") were charged into a weight ratio of 1:1 into a hopper for extruding the recycled material-containing layer, and the LLDPE (manufactured by Prime Polymer Co., Ltd. under the product name "Evolue SP2040") was charged into a hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

(Example A2)

A sealant film was produced in the same manner as in Example A1, except that only the recycled material 1 was charged into the hopper for extruding the recycled material-containing layer.

(Example A3)

A sealant film was produced in the same manner as in Example A2, except that the recycled material 2 was charged into the hopper for extruding the recycled material-containing layer instead of the recycled material 1, and a block polypropylene resin (bPP) (manufactured by Japan Polypropylene Corporation under the product name "Novatec PP BC6DRF") was charged into the hopper for extruding the sealant layer.

(Example A4)

A sealant film was produced in the same manner as in Example A2, except that the recycled material 2 was charged into the hopper for extruding the recycled material-containing layer instead of the recycled material 1.

(Example A5)

A sealant film was produced in the same manner as in Example A1, except that the recycled material 3 and an LLDPE (manufactured by Prime Polymer Co., Ltd. under the product name "Evolue SP2040") were charged into the hopper for extruding the recycled material-containing layer in a weight ratio of 1:1.

(Example A6)

A sealant film was produced in the same manner as in Example A2, except that the recycled material 3 was charged into the hopper for extruding the recycled material-containing layer instead of the recycled material 1.

(Example A7)

Only the recycled material 1 was charged into the hopper for extruding the recycled material-containing layer, an LLDPE (manufactured by Prime Polymer Co., Ltd. under the product name "Evolue SP2040") was charged into the hopper for extruding the sealant layer, and an LLDPE (manufactured by Prime Polymer Co., Ltd. under the product name "Evolue SP2040") was charged into the hopper for extruding the auxiliary layer. Using a single-screw multilayer extruder, an auxiliary layer with a thickness of 20 $\mu$m, a recycled material-containing layer with a thickness of 80 $\mu$m, and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

(Reference Example 1)

A commercially available PE sealant film (manufactured by Tamapoly Co., Ltd. under the product name "MZ434") was prepared.

(Comparative Example A1)

A sealant film was produced in the same manner as in Example A1, except that an orifice was inserted before the T-die to apply elongation stress when extruding the recycled material-containing layer.

(Comparative Example A2)

A sealant film was produced in the same manner as in Example A2, except that the screw rotation speed was reduced to 10 rpm when extruding the recycled material-containing layer.

(Comparative Example A3)

A sealant film was produced in the same manner as in Example A3, except that the screw rotation speed was reduced to 10 rpm, and an orifice was inserted before the T-die to apply elongation stress when extruding the recycled material-containing layer.

(Comparative Example A4)

A sealant film was produced in the same manner as in Example A4, except that the screw rotation speed was reduced to 10 rpm, and an orifice was inserted before the T-die to apply elongation stress when extruding the recycled material-containing layer.

(Comparative Example A5)

A sealant film was produced in the same manner as in Example A5, except that the screw rotation speed was reduced to 10 rpm when extruding the recycled material-containing layer.

(Comparative Example A6)

A sealant film was produced in the same manner as in Example A6, except that an orifice was inserted before the T-die to apply elongation stress when extruding the recycled material-containing layer.

<Analysis of Recycled Material-containing Layer>

(Maximum area and maximum aspect ratio of low-transmitted-brightness domains)

The maximum area and maximum aspect ratio of the low-transmitted-brightness domains in the recycled material-containing layer were calculated as follows.

(i) Using a stereomicroscope system SZX16 (product name, manufactured by Olympus Corporation), observation images (image size: 243 μm×851 μm) of the sealant film in the planar direction were captured at 10 random locations.

(ii) The obtained 10 images were subjected to image analysis using WinROOF2021 (product name, manufactured by MITANI CORPORATION). In the image analysis, the low-transmitted-brightness domain and the surrounding high-transmitted-brightness domain were binarized, and the following operations were appropriately performed in the binarization so that the visually recognized shape of the low-transmitted-brightness domain correspond to the colored area.

(a) Adjust brightness and contrast to emphasize the low-transmitted-brightness domain.

(b) Adjust the threshold to match the visually recognized low-transmitted-brightness domain with the colored area.

(c) When adjacent low-transmitted-brightness domains are recognized as one domain or when a low-transmitted-brightness domain with a hole is recognized as a plurality of domains, splitting or merging processing is performed as necessary.

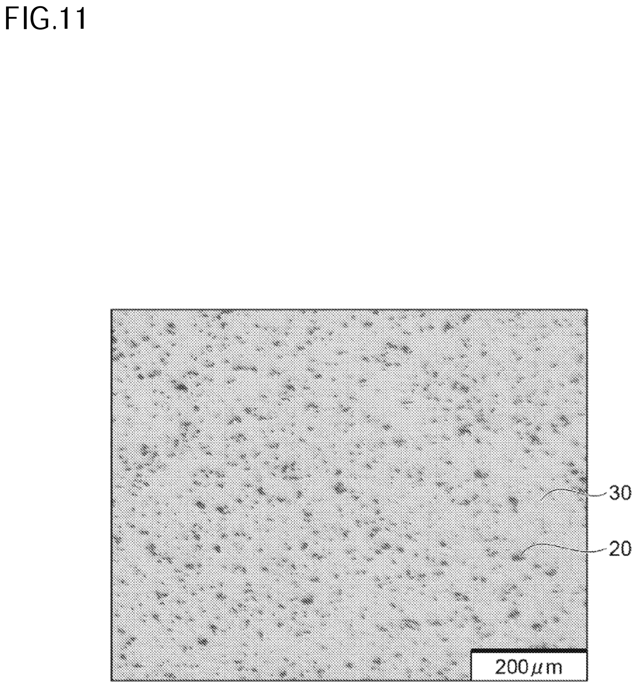

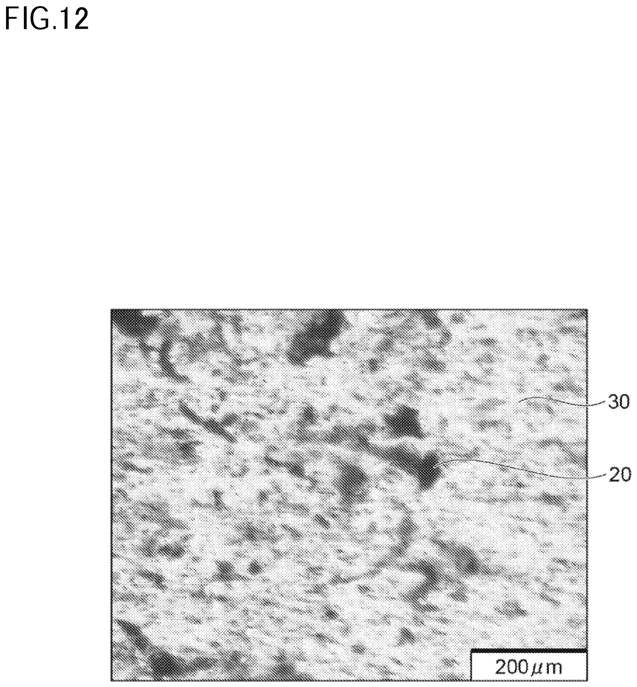

Fig. 11 is a stereomicroscope photograph of the sealant film of Example A1. Fig. 12 is a stereomicroscope photograph of the sealant film of Comparative Example A1.

(Average value and standard deviation of brightness)

The average value and standard deviation of brightness in the HSV color space data of the recycled material-containing layer were calculated as follows.

(i) The sealant film was cut to 400 mm in the width direction ($\pm$200 mm from the center) and 250 mm in the machine direction.

(ii) The cut-out sample was scanned using a digital full-color multifunction printer MP C6503 (product name, manufactured by Ricoh Co., Ltd.) under the following scanning conditions to obtain an image.
[Scanning conditions] Type: Full-color, text/photo; Resolution: 600; Size: A3

(iii) The obtained image was analyzed using the image analysis software ImageJ, and the average brightness value and standard deviation over the entire image were calculated. The image analysis included converting an image stored in TIF format into an HSB Stack, and obtaining the average value and standard deviation calculated from the V (brightness) histogram from the histogram analysis results of the HSV color space data. The V value ranges from 0 to 255.

<Evaluation of Sealant Film>

(Heat sealing strength)

Two sealant films were stacked with their sealant film layer sides facing each other and heat-sealed over a width of 20 mm, leaving 10 mm at an edge. Then, a 5-mm-wide strip was cut off from each of the two long side edges to prepare a 10-mm-wide sample. The heat sealing temperature was changed in increments of 10°C within the range of 120 to 180°C. For each sample, using a Tensilon universal testing machine RTG-1310 (manufactured by A&D Co., Ltd.), and the unsealed 10 mm portions were respectively attached to the upper and lower chucks and pulled at 100 mm/min. At this time, regardless of the heat sealing temperature, samples with a strength greater than or equal to that of the commercially available sealant film (Reference Example 1) were rated "Excellent", samples that had a strength less than that of the commercially available sealant film but broke were rated "Good", and samples in which interfacial peeling or cohesive failure occurred were rated "Poor".

(Breaking strength)

A sample measuring 15 mm $\times$ 25 mm was cut out from each sealant film with the long side aligned in the machine direction, that is, the film forming direction. Each sample was set in a Tensilon universal testing machine RTG-1310 (manufactured by A&D Co., Ltd.) with an initial grip separation of 20 mm and pulled at 100 mm/s. Samples that exhibited an elongation greater than or equal to that of the commercially available sealant film (Reference Example 1) were rated "Good", while those that exhibited an elongation less than that of the commercially available sealant film were rated "Poor".

(Appearance 1)

A laminate was obtained by laminating an adhesive layer, a PET film (manufactured by Toyobo Co., Ltd., E5202, 12 $\mu$m thick), an adhesive layer, a printed layer, and an Ny film (manufactured by Toyobo Co., Ltd. under the product name "HARDEN Film N1100", 15 $\mu$m thick) on the side of the sealant film opposite the sealant layer. On the other hand, a comparative laminate was obtained by forming a similar laminate structure on a commercially available sealant film (Reference Example 1). Laminates with a similar appearance (color) to the comparative laminate was rated "Good", while laminates with a different appearance (color) from the comparative laminate were rated "Poor".

(Appearance 2)

A laminate was obtained by laminating an adhesive layer, a PET film ("VM-PET 1310", manufactured by Toray Advanced Film Co., Ltd., 12 $\mu$m thick, aluminum vapor deposition), an adhesive layer, a printed layer, and an Ny film ("HARDEN Film N1100", manufactured by Toyobo Co., Ltd., 15 $\mu$m thick) on the side of the sealant film opposite the sealant layer. On the other hand, a comparative laminate was obtained by forming a similar laminate structure on a commercially available sealant film (Reference Example 1). Laminates with a similar appearance (surface smoothness (lack of irregularities)) to the comparative laminate were rated "Excellent", those having an appearance (surface smoothness (lack of irregularities)) inferior to that of the comparative laminate but presenting no problem for practical use were rated "Good", and those presenting problems for practical use were rated "Poor".

[Table 1]

| | | | Ex. A1 | Ex. A2 | Ex. A3 | Ex. A4 | Ex. A5 | Ex. A6 | Ex. A7 |
|---|---|---|---|---|---|---|---|---|---|
| Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) | Recycled material 1 (100 mass%) |
| | | Max area of low-transmitted-brightness domains ($\mu m^2$) | 800 | 1000 | 980 | 980 | 500 | 700 | 1000 |
| | | Max aspect ratio of low-transmitted-brightness domains | 10 | 10 | 10 | 10 | 7 | 10 | 10 |
| | | Avg. brightness | 200 | 190 | 250 | 250 | 270 | 195 | 190 |
| | | Brightness Std. Dev. | 10 | 12 | 8 | 8 | 8 | 13 | 12 |
| | Sealant layer | Material | LLDPE | LLDPE | PP | LLDPE | LLDPE | LLDPE | LLDPE |
| | Auxiliary layer | Material | - | - | - | - | - | - | LLDPE |
| Evaluation | | Heat sealing strength | Excellent | Excellent | Excellent | Good | Excellent | Excellent | Excellent |
| | | Elongation at break | Good | Good | Good | Good | Good | Good | Excellent |
| | | Appearance 1 | Good | Good | Good | Good | Good | Good | Good |
| | | Appearance 2 | Excellent | Good | Excellent | Excellent | Excellent | Good | Excellent |

EP 4 721 969 A1

[Table 2]

| | | | Comp. Ex. A1 | Comp. Ex. A2 | Comp. Ex. A3 | Comp. Ex. A4 | Comp. Ex. A5 | Comp. Ex. A6 |
|---|---|---|---|---|---|---|---|---|
| Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) |
| | | Max area of low-transmitted-brightness domains ($\mu m^2$) | 1000 | 1100 | 1230 | 1230 | 1150 | 980 |
| | | Max aspect ratio of low-transmitted-brightness domains | 11 | 9 | 15 | 15 | 5 | 25 |
| | | Avg. brightness | 190 | 190 | 175 | 175 | 200 | 193 |
| | | Brightness Std. Dev. | 12 | 11 | 15 | 15 | 11 | 13 |
| | Sealant layer | Material | LLDPE | LLDPE | PP | LLDPE | LLDPE | LLDPE |
| Evaluation | Heat sealing strength | | Poor | Poor | Poor | Poor | Poor | Poor |
| | Elongation at break | | Poor | Poor | Poor | Poor | Poor | Poor |
| | Appearance 1 | | Poor | Poor | Poor | Poor | Poor | Poor |
| | Appearance 2 | | Poor | Poor | Poor | Poor | Poor | Poor |

As shown in Table 1, the sealant films of Examples A1 to A7 had a heat sealing strength and an elongation at break greater than or equal to those of the commercially available sealant films, confirming that they have sufficient heat-sealability and mechanical properties despite containing recycled materials.

Furthermore, according to the sealant films of Examples A1 to A7, despite the recycled material containing a printed layer, laminates having an appearance better than or equal to laminates produced using commercially available sealant films can be obtained, which eliminates the need for materials and steps for providing additional layers to conceal appearance defects. This confirms that the present invention makes it possible to produce packaging materials that utilize recycled materials while reducing costs and environmental impact.

<Sealant Film Preparation B>

(Example B1)

The recycled material 1 and CR-PE were charged into a hopper for extruding the recycled material-containing layer in a weight ratio of 1:1, and CR-PE was charged into a hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

(Example B2)

A sealant film was produced in the same manner as in Example 1, except that only the recycled material 1 was charged into the hopper for extruding the recycled material-containing layer.

(Example B3)

The recycled material 2 was charged into the hopper for extruding the recycled material-containing layer, and a block polypropylene resin (bPP) (manufactured by Japan Polypropylene Corporation under the product name "Novatec PP BC6DRF") and CR-PP were charged into the hopper for extruding the sealant layer in a weight ratio of 1:1. Using a single-screw multilayer extruder, a recycled material-containing layer with a thickness of 80 $\mu$m and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

(Example B4)

A sealant film was produced in the same manner as in Example B3, except that only CR-PP was charged into the hopper for extruding the sealant layer.

(Example B5)

A sealant film was produced in the same manner as in Example B1, except that the recycled material 3 and CR-PE were charged into the hopper for extruding the recycled material-containing layer in a weight ratio of 1:1.

(Example B6)

A sealant film was produced in the same manner as in Example 2, except that the recycled material 3 was charged into the hopper for extruding the recycled material-containing layer instead of the recycled material 1.

(Example B7)

Only the recycled material 1 was charged into the hopper for extruding the recycled material-containing layer, CR-PE was charged into the hopper for extruding the sealant layer, and CR-PE was charged into the hopper for extruding the auxiliary layer. Using a single-screw multilayer extruder, an auxiliary layer with a thickness of 20 $\mu$m, a recycled material-containing layer with a thickness of 80 $\mu$m, and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

(Comparative Example B1)

A sealant film was produced in the same manner as in Example B1, except that an orifice was inserted before the T-die to apply elongation stress when extruding the recycled material-containing layer.

(Comparative Example B2)

A sealant film was produced in the same manner as in Example B2, except that the screw rotation speed was reduced to 10 rpm when extruding the recycled material-containing layer.

(Comparative Example B3)

A sealant film was produced in the same manner as in Example B3, except that the screw rotation speed was reduced to 10 rpm, and an orifice was inserted before the T-die to apply elongation stress when extruding the recycled material-containing layer.

(Comparative Example B4)

A sealant film was produced in the same manner as in Example B4, except that the screw rotation speed was reduced to 10 rpm, and an orifice was inserted before the T-die to apply elongation stress when extruding the recycled material-containing layer.

(Comparative Example B5)

A sealant film was produced in the same manner as in Example B5, except that the screw rotation speed was reduced to 10 rpm when extruding the recycled material-containing layer.

(Comparative Example B6)

A sealant film was produced in the same manner as in Example B6, except that an orifice was inserted before the T-die to apply elongation stress when extruding the recycled material-containing layer.

(Reference Example 2)

Only the recycled material 1 was charged into the hopper for extruding the recycled material-containing layer, and an LLDPE (manufactured by Prime Polymer Co., Ltd. under the product name "Evolue SP2040") was charged into the hopper for extruding the sealant layer. Using a single-screw multilayer extruder, a recycled material-containing layer with a thickness of 80 $\mu$m and a sealant layer with a thickness of 20 $\mu$m were co-extruded in this order to produce a sealant film. The screw rotation speed for extruding the recycled material-containing layer was 16 rpm.

<Analysis of Recycled Material-containing Layer>

The maximum area and maximum aspect ratio of the low-transmitted-brightness domains, and the average value and standard deviation of brightness were calculated in the same manner as described above.

<Evaluation of Sealant Film>

The heat sealing strength, breaking strength, appearance 1, and appearance 2 were evaluated in the same manner as described above, and further, the environmental impact was evaluated as follows.

(Environmental impact)

The environmental impact of each sealant film was evaluated according to the following criteria.

[Criteria]

Excellent: The proportion of plastic material contained in the recycled material (including chemical recycled resin) in the sealant film is 100% by mass, relative to the total amount of plastic material in the sealant film, and the proportion of mechanically recycled material therein is 50% or more by mass, relative to the total mass of the sealant film.

Good: The proportion of plastic material contained in the recycled material (including chemical recycled resin) in the sealant film is 100% by mass, relative to the total amount of plastic material in the sealant film, and the proportion of mechanically recycled material therein is less than 50% by mass.

Fair: The content of plastic material contained in the recycled material (including chemical recycled resin) in the sealant film is 90% or more by mass and less than 100%, relative to the total amount of plastic material in the sealant film.

Poor: The content of plastic material contained in the recycled material (including chemical recycled resin) in the sealant film is less than 90% by mass, relative to the total amount of plastic material in the sealant film.

[Table 3]

| | | | Ex. B1 | Ex. B2 | Ex. B3 | Ex. B4 | Ex. B5 | Ex. B6 | Ex. B7 |
|---|---|---|---|---|---|---|---|---|---|
| Sealant film | Recycled material-containing layer | Material | Recycled material 1 (50 mass%) CR-PE (50 mass%) | Recycled material 1 (100 mass%) | Recycled material 2 (100 mass%) | Recycled material 2 (100 mass%) | Recycled material 3 (50 mass%) CR-PE (50 mass%) | Recycled material 3 (100 mass%) | Recycled material 1 (100 mass%) |
| | | Max area of low-transmitted-brightness domains ($\mu$m$^2$) | 800 | 1000 | 980 | 980 | 500 | 700 | 1000 |
| | | Max aspect ratio of low-transmitted-brightness domains | 10 | 10 | 10 | 10 | 7 | 10 | 10 |
| | | Avg. brightness | 200 | 190 | 250 | 250 | 270 | 195 | 190 |
| | | Brightness Std. Dev. | 10 | 12 | 8 | 8 | 8 | 13 | 12 |
| | Sealant layer | Material | CR-PE | CR-PE | PP (50 mass%) CR-PP (50 mass%) | CR-PE | CR-PE | CR-PE | CR-PE |
| | Auxiliary layer | Material | - | - | - | - | - | | CR-PE |
| Evaluation | | Heat sealing strength | Excellent | Excellent | Excellent | Good | Excellent | Excellent | Excellent |
| | | Elongation at break | Good | Good | Good | Good | Good | Good | Excellent |
| | | Appearance 1 | Good | Good | Good | Good | Good | Good | Good |
| | | Appearance 2 | Excellent | Good | Excellent | Excellent | Excellent | Good | Excellent |
| | | Environmental impact | Good | Excellent | Fair | Excellent | Good | Excellent | Excellent |

[Table 4]

| | | | Comp. Ex. B1 | Comp. Ex. B2 | Comp. Ex. B3 | Comp. Ex. B4 | Comp. Ex. B5 | Comp. Ex. B6 | Ref. Ex. 2 |
|---|---|---|---|---|---|---|---|---|---|
| Sealant film | Recycled material-containing layer | Material | Recycled material 1 (50 mass%) CR-PE (50 mass%) | Recycled material 1 (100 mass%) | Recycled material 2 (100 mass%) | Recycled material 2 (100 mass%) | Recycled material 3 (50 mass%) CR-PE (50 mass%) | Recycled material 3 (100 mass%) | Recycled material 1 (100 mass%) |
| | | Max area of low-transmitted-brightness domains ($\mu m^2$) | 1000 | 1100 | 1230 | 1230 | 1150 | 980 | 1000 |
| | | Max aspect ratio of low-transmitted-brightness domains | 11 | 9 | 15 | 15 | 5 | 25 | 10 |
| | | Avg. brightness | 190 | 190 | 175 | 175 | 200 | 193 | 190 |
| | | Brightness Std. Dev. | 12 | 11 | 15 | 15 | 11 | 13 | 12 |
| | Sealant layer | Material | CR-PE | CR-PE | PP (50% by mass) CR-PP (50% by mass) | CR-PE | CR-PE | CR-PE | LLDPE |
| Evaluation | | Heat sealing strength | Poor | Poor | Poor | Poor | Poor | Poor | Excellent |
| | | Elongation at break | Poor | Poor | Poor | Poor | Poor | Poor | Good |
| | | Appearance 1 | Poor | Poor | Poor | Poor | Poor | Poor | Good |
| | | Appearance 2 | Poor | Poor | Poor | Poor | Poor | Poor | Good |
| | | Environmental impact | Good | Excellent | Fair | Excellent | Good | Excellent | Poor |

As shown in Table 3, the sealant films of Examples B1 to B7 and Reference Example 2 had a heat sealing strength and an elongation at break greater than or equal to those of the commercially available sealant films, confirming that they have sufficient heat-sealability and mechanical properties despite containing recycled materials.

Furthermore, according to the sealant films of Examples B1 to B7 and Reference Example 2, despite the recycled material containing a printed layer, laminates having an appearance better than or equal to laminates produced using commercially available sealant films can be obtained, which eliminates the need for materials and steps for providing additional layers to conceal appearance defects. This confirms that the present invention makes it possible to produce packaging materials that utilize recycled materials while reducing costs and environmental impact.

<Sealant Film Preparation C>

(Example C1)

The recycled material 1 and a biomass LLDPE were charged into a hopper for extruding the recycled material-containing layer in a weight ratio of 1:1, and a biomass LLDPE was charged into a hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

(Example C2)

A sealant film was produced in the same manner as in Example C1, except that an LLDPE (manufactured by Prime Polymer Co., Ltd. under the product name "Evolue SP2040") was charged into the hopper for extruding the sealant layer instead of the biomass LLDPE.

(Example C3)

A sealant film was produced in the same manner as in Example C1, except that only the recycled material 1 was charged into the hopper for extruding the recycled material-containing layer.

(Example C4)

The recycled material 2 was charged into the hopper for extruding the recycled material-containing layer, and an LLDPE (manufactured by Prime Polymer Co., Ltd. under the product name "Evolue SP2040") and a biomass LLDPE were charged into the hopper for extruding the sealant layer in a weight ratio of 1:1. Using a single-screw multilayer extruder, a recycled material-containing layer with a thickness of 80 $\mu$m and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

(Example C5)

A sealant film was produced in the same manner as in Example C3, except that the recycled material 2 was charged into the hopper for extruding the recycled material-containing layer instead of the recycled material 1.

(Example C6)

A sealant film was produced in the same manner as in Example C1, except that the recycled material 3 and a biomass LLDPE were charged into the hopper for extruding the recycled material-containing layer in a weight ratio of 1:1.

(Example C7)

A sealant film was produced in the same manner as in Example C3, except that the recycled material 3 was charged into the hopper for extruding the recycled material-containing layer instead of the recycled material 1.

(Example C8)

Only the recycled material 1 was charged into the hopper for extruding the recycled material-containing layer, a biomass LLDPE was charged into the hopper for extruding the sealant layer, and a biomass LLDPE was charged into the hopper for extruding the auxiliary layer. Using a single-screw multilayer extruder, an auxiliary layer with a thickness of 20 μm, a recycled material-containing layer with a thickness of 80 μm, and a sealant layer with a thickness of 20 μm were co-extruded in this order to produce a sealant film. The screw rotation speed during extrusion of the recycled material-containing layer was set to 16 rpm, and narrowing of the flow path before the T-die was minimized to reduce the applied elongational stress.

(Comparative Example C1)

A sealant film was produced in the same manner as in Example C1, except that an orifice was inserted before the T-die to apply elongation stress when extruding the recycled material-containing layer.

(Comparative Example C2)

A sealant film was produced in the same manner as in Example C3, except that the screw rotation speed was reduced to 10 rpm when extruding the recycled material-containing layer.

(Comparative Example C3)

A sealant film was produced in the same manner as in Example C4, except that the screw rotation speed was reduced to 10 rpm, and an orifice was inserted before the T-die to apply elongation stress when extruding the recycled material-containing layer.

(Comparative Example C4)

A sealant film was produced in the same manner as in Example C5, except that the screw rotation speed was reduced to 10 rpm, and an orifice was inserted before the T-die to apply elongation stress when extruding the recycled material-containing layer.

(Comparative Example C5)

A sealant film was produced in the same manner as in Example C6, except that the screw rotation speed was reduced to 10 rpm when extruding the recycled material-containing layer.

(Comparative Example C6)

A sealant film was produced in the same manner as in Example C7, except that an orifice was inserted before the T-die to apply elongation stress when extruding the recycled material-containing layer.

(Comparative Example C7)

Only the recycled material 1 was charged into the hopper for extruding the recycled material-containing layer, and an LLDPE (manufactured by Prime Polymer Co., Ltd. under the product name "Evolue SP2040") was charged into the hopper for extruding the sealant layer. Using a single-screw multilayer extruder, a recycled material-containing layer with a thickness of 80 μm and a sealant layer with a thickness of 20 μm were co-extruded in this order to produce a sealant film. The screw rotation speed for extruding the recycled material-containing layer was 10 rpm.

<Analysis of Recycled Material-containing Layer>

The maximum area and maximum aspect ratio of the low-transmitted-brightness domains, and the average value and standard deviation of brightness were calculated in the same manner as described above.

<Evaluation of Sealant Film>

The heat sealing strength, breaking strength, appearance 1, and appearance 2 were evaluated in the same manner as described above, and further, the biomass content was evaluated as follows.

(Biomass content)

The biomass content of each sealant film was calculated by measuring the concentration of radiocarbon (C14) and determining the content of biomass-derived carbon, and evaluated according to the following criteria.

[Criteria]

Excellent: The content of the biomass raw material in the sealant film is 30% or more by mass relative to the total mass of the sealant film.

Good: The content of the biomass raw material in the sealant film is 15% or more by mass and less than 30% by mass, relative to the total mass of the sealant film.

Fair: The content of the biomass raw material in the sealant film is 5% or more by mass and less than 15% by mass, relative to the total mass of the sealant film.

Poor: The content of the biomass raw material in the sealant film is less than 5% by mass relative to the total mass of the sealant film.

[Table 5]

| | | | Ex. C1 | Ex. C2 | Ex. C3 | Ex. C4 | Ex. C5 | Ex. C6 | Ex. C7 | Ex. C8 |
|---|---|---|---|---|---|---|---|---|---|---|
| Sealant film | Recycled material-containing layer | Material | Recycled material 1 (50 mass%) Biomass LLDPE (50 mass%) | Recycled material 1 (50 mass%) Biomass LLDPE (50 mass%) | Recycled material 1 (100 mass%) | Recycled material 2 (100 mass%) | Recycled material 2 (100 mass%) | Recycled material 3 (50 mass%) Biomass LLDPE (50 mass%) | Recycled material 3 (100 mass%) | Recycled material 1 (100 mass%) |
| | | Max area of low-transmitted-brightness domains ($\mu$m$^2$) | 800 | 800 | 1000 | 980 | 980 | 500 | 700 | 1000 |
| | | Max aspect ratio of low-transmitted-brightness domains | 10 | 10 | 10 | 10 | 10 | 7 | 10 | 10 |
| | | Avg. brightness | 200 | 200 | 190 | 250 | 250 | 270 | 195 | 190 |
| | | Brightness Std. Dev. | 10 | 10 | 12 | 8 | 8 | 8 | 13 | 12 |
| | Sealant layer | Material | Biomass LLDPE (100 mass%) | LLDPE (100 mass%) | Biomass LLDPE (100 mass%) | LLDPE (50 mass%) Biomass LLDPE (50 mass%) | Biomass LLDPE (100 mass%) | Biomass LLDPE (100 mass%) | Biomass LLDPE (100 mass%) | Biomass LLDPE (100 mass%) |
| | Auxiliary layer | Material | - | - | - | - | - | - | | Biomass LLDPE |
| Evaluation | | Heat sealing strength | Excellent | Excellent | Excellent | Excellent | Good | Excellent | Excellent | Excellent |
| | | Elongation at break | Good | Good | Good | Good | Good | Good | Good | Excellent |
| | | Appearance 1 | Good | Good | Good | Good | Good | Good | Good | Good |
| | | Appearance 2 | Excellent | Excellent | Excellent | Excellent | Excellent | Excellent | Good | Excellent |
| | | Biomass content | Excellent | Excellent | Good | Fair | Good | Excellent | Good | Good |

32

EP 4 721 969 A1

[Table 6]

| | | | Comp. Ex. C1 | Comp. Ex. C2 | Comp. Ex. C3 | Comp. Ex. C4 | Comp. Ex. C5 | Comp. Ex. C6 | Comp. Ex. C7 |
|---|---|---|---|---|---|---|---|---|---|
| Sealant film | Recycled material-containing layer | Material | Recycled material 1 (50 mass%) Biomass LLDPE (50 mass%) | Recycled material 1 (100 mass%) | Recycled material 2 (100 mass%) | Recycled material 2 (100 mass%) | Recycled material 3 (50 mass%) Biomass LLDPE (50 mass%) | Recycled material 3 (100 mass%) | Recycled material 1 (100 mass%) |
| | | Max area of low-transmitted-brightness domains ($\mu m^2$) | 1000 | 1100 | 1230 | 1230 | 1150 | 980 | 1100 |
| | | Max aspect ratio of low-transmitted-brightness domains | 11 | 9 | 15 | 15 | 5 | 25 | 9 |
| | | Avg. brightness | 190 | 190 | 175 | 175 | 200 | 193 | 190 |
| | | Brightness Std. Dev. | 12 | 11 | 15 | 15 | 11 | 13 | 11 |
| | Sealant layer | Material | Biomass LLDPE (100 mass%) | Biomass LLDPE (100 mass%) | LLDPE (50 mass%) Biomass LLDPE (50 mass%) | Biomass LLDPE (100 mass%) | Biomass LLDPE (100 mass%) | Biomass LLDPE (100 mass%) | LLDPE (100 mass%) |
| Evaluation | | Heat sealing strength | Poor | Poor | Poor | Poor | Poor | Poor | Poor |
| | | Elongation at break | Poor | Poor | Poor | Poor | Poor | Poor | Poor |
| | | Appearance 1 | Poor | Poor | Poor | Poor | Poor | Poor | Poor |
| | | Appearance 2 | Poor | Poor | Poor | Poor | Poor | Poor | Poor |
| | | Biomass content | Excellent | Good | Fair | Good | Excellent | Good | Poor |

As shown in Table 5, the sealant films of Examples C1 to C8 had a heat sealing strength and an elongation at break greater than or equal to those of the commercially available sealant films, confirming that they have sufficient heat-sealability and mechanical properties despite containing recycled materials. Furthermore, the sealant films of Examples C1 to C8 contain 5% or more by mass of biomass raw materials, indicating that the biomass content of plastic-containing products can be increased.

Furthermore, according to the sealant films of Examples C1 to C8, despite the recycled material containing a printed layer, laminates having an appearance better than or equal to laminates produced using commercially available sealant films can be obtained, which eliminates the need for materials and steps for providing additional layers to conceal appearance defects. This confirms that the present invention makes it possible to produce packaging materials that utilize recycled materials while reducing costs and environmental impact.

<Sealant Film Preparation D>

(Example D1)

The recycled material 1 and an LLDPE (manufactured by Prime Polymer Co., Ltd. under the product name "Evolue SP2040") were charged into a weight ratio of 1:1 into a hopper for extruding the recycled material-containing layer, and the LLDPE (manufactured by Prime Polymer Co., Ltd. under the product name "Evolue SP2040") was charged into a hopper for extruding the sealant layer. Using a single-screw multilayer extruder, a recycled material-containing layer with a thickness of 80 μm and a sealant layer with a thickness of 20 μm were co-extruded to produce a sealant film. The screw rotation speed during extrusion of the recycled material-containing layer was set to 16 rpm, and narrowing of the flow path before the T-die was minimized to reduce the applied elongational stress.

The surface of each sealant film obtained above opposite to the sealant layer side was irradiated with electron beams under the following conditions using an electron beam irradiation device (line-irradiation type low-energy electron beam irradiation device EES-L-DP01, manufactured by Hamamatsu Photonics K.K.).

(Irradiation conditions)

Voltage: 120 kV

Irradiation dose: 100 kGy

Oxygen concentration inside the device: 100 ppm or less

Line speed: 25 m/min

(Example D2)

A sealant film was produced in the same manner as in Example D1, except that only the recycled material 1 was charged into the hopper for extruding the recycled material-containing layer, and the resulting film was then irradiated with electron beams.

(Example D3)

A sealant film was produced in the same manner as in Example D2, except that the recycled material 2 was charged into the hopper for extruding the recycled material-containing layer instead of the recycled material 1, and a homopolypropylene resin (hPP) (manufactured by Prime Polymer Co., Ltd. under the product name "Prime Polypro F-300SP") was charged into the hopper for extruding the sealant layer. The sealant film was then irradiated with electron beams.

(Example D4)

A sealant film was produced in the same manner as in Example D2, except that the recycled material 2 was charged into the hopper for extruding the recycled material-containing layer instead of the recycled material 1, and the resulting film was then irradiated with electron beams.

(Example D5)

A sealant film was produced in the same manner as in Example D1, except that the recycled material 3 and an LLDPE (manufactured by Prime Polymer Co., Ltd. under the product name "Evolue SP2040") were charged into the hopper for extruding the recycled material-containing layer in a weight ratio of 1:1, and the resulting film was then irradiated with electron beams.

(Example D6)

A sealant film was produced in the same manner as in Example D2, except that the recycled material 3 was charged into the hopper for extruding the recycled material-containing layer instead of the recycled material 1, and the resulting film was then irradiated with electron beams.

(Example D7)

Only the recycled material 1 was charged into the hopper for extruding the recycled material-containing layer, an LLDPE (manufactured by Prime Polymer Co., Ltd. under the product name "Evolue SP2040") was charged into the hopper for extruding the sealant layer, and an LLDPE (manufactured by Prime Polymer Co., Ltd. under the product name "Evolue SP2040") was charged into the hopper for extruding the auxiliary layer. Using a single-screw multilayer extruder, an auxiliary layer with a thickness of 20 μm, a recycled material-containing layer with a thickness of 80 μm, and a sealant layer with a thickness of 20 μm were co-extruded in this order to produce a sealant film. The screw rotation speed during extrusion of the recycled material-containing layer was set to 16 rpm, and narrowing of the flow path before the T-die was minimized to reduce the applied elongational stress.
The sealant film thus obtained irradiated with electron beams in the same manner as in Example D1.

(Comparative Example D1)

A sealant film was produced in the same manner as in Example D1, except that an orifice was inserted before the T-die to apply elongation stress when extruding the recycled material-containing layer, and the resulting film was then irradiated with electron beams.

(Comparative Example D2)

A sealant film was produced in the same manner as in Example D2, except that the screw rotation speed was reduced to 10 rpm when extruding the recycled material-containing layer, and the resulting film was then irradiated with electron beams.

(Comparative Example D3)

A sealant film was produced in the same manner as in Example D3, except that the screw rotation speed was reduced to 10 rpm, and an orifice was inserted before the T-die to apply elongation stress when extruding the recycled material-containing layer, and the resulting film was then irradiated with electron beams.

(Comparative Example D4)

A sealant film was produced in the same manner as in Example D4, except that the screw rotation speed was reduced to 10 rpm, and an orifice was inserted before the T-die to apply elongation stress when extruding the recycled material-containing layer, and the resulting film was then irradiated with electron beams.

(Comparative Example D5)

A sealant film was produced in the same manner as in Example D5, except that the screw rotation speed was reduced to 10 rpm when extruding the recycled material-containing layer, and the resulting film was then irradiated with electron beams.

(Comparative Example D6)

A sealant film was produced in the same manner as in Example D6, except that an orifice was inserted before the T-die to apply elongation stress when extruding the recycled material-containing layer, and the resulting film was then irradiated with electron beams.

<Analysis of Recycled Material-containing Layer>

The maximum area and maximum aspect ratio of the low-transmitted-brightness domains, and the average value and standard deviation of brightness were calculated in the same manner as described above.

<Evaluation of Sealant Film>

(Gel fraction)

The gel fraction of each sealant film was calculated as follows.

[Method of Calculating Gel Fraction]

(i) First, X g of sealant film cut into a size of 3.2 cm × 3.2 cm is wrapped in Y g of stainless steel mesh (9 cm × 6 cm), and heated and immersed in 350 ml of xylene. The heating temperature and immersion time are 120°C and 8 hours, respectively.

(ii) The sealant film wrapped in the stainless steel mesh is taken out of the solvent and dried in a vacuum. The drying temperature and drying time are 60°C and 3 hours, respectively.

(iii) The mass (Z g) of the sealant film wrapped in the stainless steel mesh after drying is measured, and the gel fraction is calculated using the following formula (1).

$$\text{Gel fraction (mass\%)} = [(Z - Y)/X] \times 100 \dots (1)$$

The gel fraction of films not irradiated with electron beams, as in Reference Example 1, was 0.0% by mass.
In addition, the heat sealing strength, breaking strength, appearance 1, and appearance 2 were evaluated in the same manner as described above, and the puncture strength was also evaluated as follows.

(Puncture strength)

A sample measuring 50 mm × 50 mm was cut out from each sealant film. Using a Tensilon AD-7703 (product name, manufactured by A&D Co., Ltd.) and a dedicated semicircular needle with a diameter of 1.0 mm and a tip radius of 0.5 mm, the maximum force (N) at which the needle penetrated was measured under the conditions of a test speed of 50 mm/min, a load cell of 100 N, and a load range of 10 N (10%), and the measured value was evaluated as the puncture strength. Samples with a strength of 1 time or more and less than 1.5 times that of a commercially available sealant film (Reference Example 1) were rated "Good", and those with less strength were rated "Poor".

[Table 7]

| | | | Ex. D1 | Ex. D2 | Ex. D3 | Ex. D4 | Ex. D5 | Ex. D6 | Ex. D7 |
|---|---|---|---|---|---|---|---|---|---|
| Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) | Recycled material 1 (100 mass%) |
| | | Max area of low-transmitted-brightness domains ($\mu$m$^2$) | 800 | 1000 | 980 | 980 | 500 | 700 | 1000 |
| | | Max aspect ratio of low-transmitted-brightness domains | 10 | 10 | 10 | 10 | 7 | 10 | 10 |
| | | Avg. brightness | 200 | 190 | 250 | 250 | 270 | 195 | 190 |
| | | Brightness Std. Dev. | 10 | 12 | 8 | 8 | 8 | 13 | 12 |
| | Sealant layer | Material | LLDPE | LLDPE | PP | LLDPE | LLDPE | LLDPE | LLDPE |
| | Auxiliary layer | Material | - | - | - | - | - | - | LLDPE |
| Evaluation | | Gel fraction (mass%) | 12.3 | 11.7 | 5.1 | 11. 9 | 12. 0 | 11.5 | 11. 3 |
| | | Heat sealing strength | Excellent | Excellent | Excellent | Good | Excellent | Excellent | Excellent |
| | | Elongation at break | Good | Good | Good | Good | Good | Good | Excellent |
| | | Puncture strength | Good | Good | Good | Good | Good | Good | Good |
| | | Appearance 1 | Good | Good | Good | Good | Good | Good | Good |
| | | Appearance 2 | Excellent | Good | Excellent | Excellent | Excellent | Good | Excellent |

[Table 8]

| | | | Comp. Ex. D1 | Comp. Ex. D2 | Comp. Ex. D3 | Comp. Ex. D4 | Comp. Ex. D5 | Comp. Ex. D6 |
|---|---|---|---|---|---|---|---|---|
| Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) |
| | | Max area of low-transmitted-brightness domains ($\mu m^2$) | 1000 | 1100 | 1230 | 1230 | 1150 | 980 |
| | | Max aspect ratio of low-transmitted-brightness domains | 11 | 9 | 15 | 15 | 5 | 25 |
| | | Avg. brightness | 190 | 190 | 175 | 175 | 200 | 193 |
| | | Brightness Std. Dev. | 12 | 11 | 15 | 15 | 11 | 13 |
| | Sealant layer | Material | LLDPE | LLDPE | PP | LLDPE | LLDPE | LLDPE |
| | Auxiliary layer | Material | - | - | - | - | - | - |
| Evaluation | Gel fraction (mass%) | | 11.0 | 10. 1 | 4. 8 | 10.3 | 10. 8 | 9. 8 |
| | Heat sealing strength | | Poor | Poor | Poor | Poor | Poor | Poor |
| | Elongation at break | | Poor | Poor | Poor | Poor | Poor | Poor |
| | Puncture strength | | Good | Poor | Poor | Poor | Poor | Poor |
| | Appearance 1 | | Poor | Poor | Poor | Poor | Poor | Poor |
| | Appearance 2 | | Poor | Poor | Poor | Poor | Poor | Poor |

As shown in Table 7, the sealant films of Examples D1 to D7 had a heat sealing strength and an elongation at break greater than or equal to those of the commercially available sealant films, confirming that they have sufficient heat-sealability and mechanical properties despite containing recycled materials.

Furthermore, according to the sealant films of Examples D1 to D7, despite the recycled material containing a printed layer, laminates having an appearance better than or equal to laminates produced using commercially available sealant films can be obtained, which eliminates the need for materials and steps for providing additional layers to conceal appearance defects. This confirms that the present invention makes it possible to produce packaging materials that utilize recycled materials while reducing costs and environmental impact.

<Sealant Film Preparation E>

(Example E1)

The recycled material 1 and an LLDPE (manufactured by Prime Polymer Co., Ltd. under the product name "Evolue SP2040") were charged into the hopper for extruding the recycled material-containing layer in a weight ratio of 1:1, and further, inorganic particles 1 were added so that its content in the recycled material-containing layer was 10% by mass. An LLDPE (manufactured by Prime Polymer Co., Ltd. under the product name "Evolue SP2040") was charged into the hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

(Example E2)

A sealant film was produced in the same manner as in Example E1, except that the recycled material 1 and the inorganic particles 1 were charged into the hopper for extruding the recycled material-containing layer. The amount of inorganic particles 1 added was adjusted so that the content in the recycled material-containing layer was 10% by mass.

(Example E3)

A sealant film was produced in the same manner as in Example E1, except that the recycled material 2 and the inorganic particles 1 were charged into the hopper for extruding the recycled material-containing layer, and a block polypropylene resin (bPP) (manufactured by Japan Polypropylene Corporation under the product name "Novatec PP BC6DRF") was charged into the hopper for extruding the sealant layer. The amount of inorganic particles 1 added was adjusted so that the content in the recycled material-containing layer was 10% by mass.

(Example E4)

A sealant film was produced in the same manner as in Example E2, except that the recycled material 2 was charged into the hopper for extruding the recycled material-containing layer instead of the recycled material 1.

(Example E5)

A sealant film was produced in the same manner as in Example E1, except that the recycled material 3 and an LLDPE (manufactured by Prime Polymer Co., Ltd. under the product name "Evolue SP2040") were charged into the hopper for extruding the recycled material-containing layer in a weight ratio of 1:1, and further, the inorganic particles 1 were added so that its content in the recycled material-containing layer would be 10% by mass.

(Example E6)

A sealant film was produced in the same manner as in Example E2, except that the recycled material 3 was charged into the hopper for extruding the recycled material-containing layer instead of the recycled material 1.

(Example E7)

The recycled material 1 and the organic particles 1 were charged into the hopper for extruding the recycled material-containing layer, an LLDPE (manufactured by Prime Polymer Co., Ltd. under the product name "Evolue SP2040") was charged into the hopper for extruding the sealant layer, and an LLDPE (manufactured by Prime Polymer Co., Ltd. under the product name "Evolue SP2040") was charged into the hopper for extruding the auxiliary layer. Using a single-screw multilayer extruder, an auxiliary layer with a thickness of 20 $\mu$m, a recycled material-containing layer with a thickness of 80 $\mu$m, and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress. The amount of inorganic particles 1 added was adjusted so that the content in the recycled material-containing layer was 10% by mass.

(Example E8)

The recycled material 1 and an LLDPE (manufactured by Prime Polymer Co., Ltd. under the product name "Evolue SP2040") were charged into the hopper for extruding the recycled material-containing layer in a weight ratio of 1:1, and further, inorganic particles 1 were added so that its content in the recycled material-containing layer would be 5% by mass. An LLDPE (manufactured by Prime Polymer Co., Ltd. under the product name "Evolue SP2040") was charged into the hopper for extruding the sealant layer. An LLDPE (manufactured by Prime Polymer Co., Ltd. under the product name "Evolue SP2040") and the inorganic particles 1 were charged into the hopper for extruding the auxiliary layer so that the content of the inorganic particles 1 in the auxiliary layer would be 20% by mass. Using a single-screw multilayer extruder, an auxiliary layer with a thickness of 20 $\mu$m, a recycled material-containing layer with a thickness of 80 $\mu$m, and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

(Example E9)

A sealant film was produced in the same manner as in Example E8, except that the recycled material 1 and an LLDPE (manufactured by Prime Polymer Co., Ltd. under the product name "Evolue SP2040") were charged into the hopper for extruding the recycled material-containing layer in a weight ratio of 1:1, without the inorganic particles 1, and the LLDPE (manufactured by Prime Polymer Co., Ltd. under the product name "Evolue SP2040") and the inorganic particles 1 were charged into the hopper for extruding the auxiliary layer so that the content of the inorganic particles 1 in the auxiliary layer would be 40% by mass.

(Example E10)

A sealant film was produced in the same manner as in Example E1, except that the amount of the inorganic particles 1 added was adjusted so that its content in the recycled material-containing layer would be 5% by mass.

(Example E11)

A sealant film was produced in the same manner as in Example E1, except that the amount of the inorganic particles 1 added was adjusted so that its content in the recycled material-containing layer would be 7% by mass.

(Example E12)

A sealant film was produced in the same manner as in Example E1, except that the amount of the inorganic particles 1 added was adjusted so that its content in the recycled material-containing layer would be 20% by mass.

(Example E13)

A sealant film was produced in the same manner as in Example E1, except that the amount of the inorganic particles 1 added was adjusted so that its content in the recycled material-containing layer would be 23% by mass.

(Comparative Example E1)

A sealant film was produced in the same manner as in Example E1, except that an orifice was inserted before the T-die to apply elongation stress when extruding the recycled material-containing layer.

(Comparative Example E2)

A sealant film was produced in the same manner as in Example E2, except that the screw rotation speed was reduced to 10 rpm when extruding the recycled material-containing layer.

(Comparative Example E3)

A sealant film was produced in the same manner as in Example E3, except that the screw rotation speed was reduced to 10 rpm, and an orifice was inserted before the T-die to apply elongation stress when extruding the recycled material-containing layer.

(Comparative Example E4)

A sealant film was produced in the same manner as in Example E4, except that the screw rotation speed was reduced to 10 rpm, and an orifice was inserted before the T-die to apply elongation stress when extruding the recycled material-containing layer.

(Comparative Example E5)

A sealant film was produced in the same manner as in Example E5, except that the screw rotation speed was reduced to 10 rpm when extruding the recycled material-containing layer.

(Comparative Example E6)

A sealant film was produced in the same manner as in Example E6, except that an orifice was inserted before the T-die to apply elongation stress when extruding the recycled material-containing layer.

<Analysis of Recycled Material-containing Layer>

The maximum area and maximum aspect ratio of the low-transmitted-brightness domains, and the average value and standard deviation of brightness were calculated in the same manner as described above.

<Evaluation of Sealant Film>

The heat sealing strength, breaking strength, and appearance 2 were evaluated in the same manner as described above, and further, the cold impact resistance and appearance 3 (concealability) were evaluated as follows.

(Cold impact resistance)

Using a film impact tester manufactured by Toyo Seiki Seisaku-sho, Ltd., the impact strength of each example sealant film was measured during low-temperature storage under conditions of a temperature of -5°C, an impact energy of 1.5 J, and a bullet size of 1/2 inch. Samples with an impact strength (film impact) of less than 4.00 J/mm was rated "Poor", those with an impact strength of 4.00 J/mm or more and less than 6.00 J/mm were rated "Fair", those with an impact strength of 6.00 J/mm or more and less than 8.00 J/mm were rated "Good", and those with an impact strength of 8.00 J/mm or more were rated "Excellent".

(Appearance 3: Concealability)

The concealability of each example sealant film was evaluated using a portable transmission densitometer (model number 341C) manufactured by X-RITE. Samples with a measured optical density of less than 0.20 were rated "Poor", those with an optical density of 0.20 or more and less than 0.40 were rated "Fair", those with an optical density of 0.40 or more and less than 0.50 were rated "Good", and those with an optical density of 0.50 or more were rated "Excellent".

[Table 9]

| | | | Ex. E1 | Ex. E2 | Ex. E3 | Ex. E4 | Ex. E5 | Ex. E6 | Ex. E7 |
|---|---|---|---|---|---|---|---|---|---|
| Sealant film | Recycled material-containing layer | Material | Recycled material 1 45 mass%) LLDPE (45 mass%) Inorganic particles 1 (10 mass%) | Recycled material 1 (90 mass%) Inorganic particles 1 (10 mass%) | Recycled material 2 (90 mass%) Inorganic particles 1 (10 mass%) | Recycled material 2 (90 mass%) Inorganic particles 1 (10 mass%) | Recycled material 3 (45 mass%) LLDPE (45 mass%) Inorganic particles 1 (10 mass%) | Recycled material 3 (90 mass%) Inorganic particles 1 (10 mass%) | Recycled material 1 (90 mass%) Inorganic particles 1 (10 mass%) |
| | | fax area of low-transmitted-brightness domains ($\mu m^2$) | 800 | 1000 | 980 | 980 | 500 | 700 | 1000 |
| | | Max aspect ratio of low-transmitted-brightness domains | 10 | 10 | 10 | 10 | 7 | 10 | 10 |
| | Sealant layer | Material | LLDPE | LLDPE | PP | LLDPE | LLDPE | LLDPE | LLDPE |
| | Auxiliary layer | Material | - | - | - | - | - | | LLDPE |
| Evaluation | Heat sealing strength | | Excellent | Excel lent | Excellent | Good | Excellent | Excellent | Excellent |
| | Elongation at break | | Good | Good | Good | Good | Good | Good | Excellent |
| | Cold impact resistance | | Good | Good | Good | Good | Good | Good | Good |
| | Appearance 3: concealability | | Excellent | Excellent | Excellent | Excellent | Excel lent | Excellent | Excellent |
| | Appearance 2: surface smoothness | | Excellent | Good | Excellent | Excellent | Excellent | Good | Excellent |

[Table 10]

| | | | Ex. E8 | Ex. E9 | Ex. E10 | Ex. E11 | Ex. E12 | Ex. E13 |
|---|---|---|---|---|---|---|---|---|
| Sealant film | Recycled material-containing layer | Material | Recycled material 1 (47.5 mass%) LLDPE (47.5 mass%) Inorganic particles 1 (5 mass%) | Recycled material 1 (50 mass%) LLDPE (50 mass%) | Recycled material 1 (95 mass%) Inorganic particles 1 (5 mass%) | Recycled material 1 (93 mass%) Inorganic particles 1 (7 mass%) | Recycled mater ia l 1 (80 mass%) Inorganic particles 1 (20 mass%) | Recycled material 1 (77 mass%) Inorganic particles 1 (23 mass%) |
| | | Max area of low-trans-mitted-brightness domains ($\mu m^2$) | 800 | 800 | 1000 | 1000 | 1000 | 1000 |
| | | Max aspect ratio of low-transmitted-brightness domains | 10 | 10 | 10 | 10 | 10 | 10 |
| | Sealant layer | Material | LLDPE | LLDPE | LLDPE | LLDPE | LLDPE | LLDPE |
| | Auxiliary layer | Material | LLDPE (80 mass%) Inorganic Particle 1 (20 mass%) | LLDPE (60 mass%) Inorganic Particle 1 (40 mass%) | - | - | - | - |
| Evaluation | Heat sealing strength | | Excellent | Excellent | Excellent | Excellent | Excellent | Excellent |
| | Elongation at break | | Good | Good | Good | Good | Good | Good |
| | Cold impact resistance | | Good | Good | Excellent | Excellent | Good | Fair |
| | Appearance 3: concealability | | Excellent | Excellent | Fair | Good | Excellent | Excellent |
| | Appearance 2: surface smoothness | | Excellent | Excellent | Good | Good | Good | Good |

[Table 11]

| | | | Comp. Ex. E1 | Comp. Ex. E2 | Comp. Ex. E3 | Comp. Ex. E4 | Comp. Ex. E5 | Comp. Ex. E6 |
|---|---|---|---|---|---|---|---|---|
| Sealant film | Recycled material-containing layer | Material | Recycled material 1 (45 mass%) LLDPE (45 mass%) Inorganic particles 1 (10 mass%) | Recycled mater ia l 1 (90 mass%) Inorganic particles 1 (10 mass%) | Recycled material 2 (90 mass%) Inorganic particles 1 (10 mass%) | Recycled material 2 (90 mass%) Inorganic particles 1 (10 mass%) | Recycled material 3 (45 mass%) LLDPE (45 mass%) Inorganic particles 1 (10 mass%) | Recycled material 3 (90 mass%) Inorganic particles 1 (10 mass%) |
| | | Max area of low-trans-mitted-brightness domains ($\mu m^2$) | 1000 | 1100 | 1230 | 1230 | 1150 | 980 |
| | | Max aspect ratio of low-transmitted-brightness domains | 11 | 9 | 15 | 15 | 5 | 25 |
| | Sealant layer | Material | LLDPE | LLDPE | PP | LLDPE | LLDPE | LLDPE |
| | Auxiliary layer | Material | - | - | - | - | - | - |
| Evaluation | | Heat sealing strength | Poor | Poor | Poor | Poor | Poor | Poor |
| | | Elongation at break | Poor | Poor | Poor | Poor | Poor | Poor |
| | | Cold impact resistance | Good | Poor | Poor | Poor | Poor | Good |
| | | Appearance 3: concealability | Good | Good | Good | Good | Good | Good |
| | | Appearance 2: surface smoothness | Poor | Poor | Poor | Poor | Poor | Poor |

As shown in Tables 9 and 10, the sealant films of Examples E1 to E13 had a heat sealing strength and an elongation at break greater than or equal to those of the commercially available sealant films, confirming that they have sufficient heat-sealability and mechanical properties despite containing recycled materials. Furthermore, it was confirmed that the sealant films of Examples E1 to E13 were provided with sufficient concealability by the addition of inorganic particles. This makes it possible to omit an aluminum substrate or other components that are conventionally used to impart concealability to packaging materials. Therefore, according to the present invention, it is possible to produce packaging materials that utilize recycled materials while reducing costs and environmental impact, and to contribute to the diversification of packaging materials.

<Sealant Film and Laminate Preparation F>

(Example F1)

The recycled material 1 and an LLDPE (manufactured by Prime Polymer Co., Ltd. under the product name "Evolue SP2040") were charged into a weight ratio of 1:1 into a hopper for extruding the recycled material-containing layer, and the LLDPE (manufactured by Prime Polymer Co., Ltd. under the product name "Evolue SP2040") was charged into a hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

Then, a 40-nm-thick vapor-deposited layer made of aluminum (vapor-deposited aluminum layer) was formed on the recycled material-containing layer of the sealant film obtained above with a vacuum deposition device using the electron beam heating method, thereby preparing a laminate.

(Example F2)

A sealant film was produced in the same manner as in Example 1, except that only the recycled material 1 was charged into the hopper for extruding the recycled material-containing layer. Then, a vapor-deposited aluminum layer was formed on this sealant film in the same manner as in Example F1 to prepare a laminate.

(Example F3)

A sealant film was produced in the same manner as in Example F2, except that the recycled material 2 was charged into the hopper for extruding the recycled material-containing layer instead of the recycled material 1, and a block polypropylene resin (bPP) (manufactured by Japan Polypropylene Corporation under the product name "Novatec PP BC6DRF") was charged into the hopper for extruding the sealant layer. Then, a vapor-deposited aluminum layer was formed on this sealant film in the same manner as in Example F1 to prepare a laminate.

(Example F4)

A sealant film was produced in the same manner as in Example F2, except that the recycled material 2 was charged into the hopper for extruding the recycled material-containing layer instead of the recycled material 1. Then, a vapor-deposited aluminum layer was formed on this sealant film in the same manner as in Example F1 to prepare a laminate.

(Example F5)

A sealant film was produced in the same manner as in Example F1, except that the recycled material 3 and an LLDPE (manufactured by Prime Polymer Co., Ltd. under the product name "Evolue SP2040") were charged into the hopper for extruding the recycled material-containing layer in a weight ratio of 1:1. Then, a vapor-deposited aluminum layer was formed on this sealant film in the same manner as in Example F1 to prepare a laminate.

(Example F6)

A sealant film was produced in the same manner as in Example F2, except that the recycled material 3 was charged into the hopper for extruding the recycled material-containing layer instead of the recycled material 1. Then, a vapor-deposited aluminum layer was formed on this sealant film in the same manner as in Example F1 to prepare a laminate.

(Example F7)

Only the recycled material 1 was charged into the hopper for extruding the recycled material-containing layer, an LLDPE (manufactured by Prime Polymer Co., Ltd. under the product name "Evolue SP2040") was charged into the hopper for extruding the sealant layer, and an LLDPE (manufactured by Prime Polymer Co., Ltd. under the product name "Evolue SP2040") was charged into the hopper for extruding the auxiliary layer. Using a single-screw multilayer extruder, an auxiliary layer with a thickness of 20 $\mu$m, a recycled material-containing layer with a thickness of 80 $\mu$m, and a sealant layer with a thickness of 20 $\mu$m were co-extruded in this order to produce a sealant film. The screw rotation speed during extrusion of the recycled material-containing layer was set to 16 rpm, and narrowing of the flow path before the T-die was minimized to reduce the applied elongational stress.

Then, a 40-nm-thick vapor-deposited layer made of aluminum (vapor-deposited aluminum layer) was formed on the auxiliary layer of the sealant film obtained above with a vacuum deposition device using the electron beam heating method, thereby preparing a laminate.

(Example F8)

A sealant film was produced in the same manner as in Example F7, except that an EVOH (manufactured by Kuraray Co., Ltd. under the product name "Eval L171B") was charged into the hopper for extruding the auxiliary layer instead of the LLDPE.

Then, a 40-nm-thick transparent vapor-deposited layer made of aluminum (vapor-deposited aluminum layer) was formed on the auxiliary layer of the sealant film obtained above with a vacuum deposition device using the electron beam heating method, thereby preparing a laminate.

(Reference Example 3)

A commercially available PE sealant film (manufactured by Tamapoly Co., Ltd. under the product name "MZ434") was prepared. Then, a vapor-deposited aluminum layer was formed on this sealant film in the same manner as in Example 1 to prepare a laminate.

(Comparative Example F1)

A sealant film was produced in the same manner as in Example F1, except that an orifice was inserted before the T-die to apply elongation stress when extruding the recycled material-containing layer. Then, a vapor-deposited aluminum layer was formed on this sealant film in the same manner as in Example F1 to prepare a laminate.

(Comparative Example F2)

A sealant film was produced in the same manner as in Example F2, except that the screw rotation speed was reduced to 10 rpm when extruding the recycled material-containing layer. Then, a vapor-deposited aluminum layer was formed on this sealant film in the same manner as in Example F1 to prepare a laminate.

(Comparative Example F3)

A sealant film was produced in the same manner as in Example F3, except that the screw rotation speed was reduced to 10 rpm, and an orifice was inserted before the T-die to apply elongation stress when extruding the recycled material-containing layer. Then, a vapor-deposited aluminum layer was formed on this sealant film in the same manner as in Example F1 to prepare a laminate.

(Comparative Example F4)

A sealant film was produced in the same manner as in Example F4, except that the screw rotation speed was reduced to 10 rpm, and an orifice was inserted before the T-die to apply elongation stress when extruding the recycled material-containing layer. Then, a vapor-deposited aluminum layer was formed on this sealant film in the same manner as in Example F1 to prepare a laminate.

(Comparative Example F5)

A sealant film was produced in the same manner as in Example F5, except that the screw rotation speed was reduced to 10 rpm when extruding the recycled material-containing layer. Then, a vapor-deposited aluminum layer was formed on this sealant film in the same manner as in Example F1 to prepare a laminate.

(Comparative Example F6)

A sealant film was produced in the same manner as in Example F6, except that an orifice was inserted before the T-die to apply elongation stress when extruding the recycled material-containing layer. Then, a vapor-deposited aluminum layer was formed on this sealant film in the same manner as in Example F1 to prepare a laminate.

<Analysis of Recycled Material-containing Layer>

The maximum area and maximum aspect ratio of the low-transmitted-brightness domains, and the average value and standard deviation of brightness were calculated in the same manner as described above.

<Evaluation of Laminate>

(Heat sealing strength)

Two laminates were stacked with their sealant layer sides facing each other and heat-sealed over a width of 20 mm, leaving 10 mm at an edge. Then, a 5-mm-wide strip was cut off from each of the two long side edges to prepare a 10-mm-wide sample. The heat sealing temperature was changed in increments of 10°C within the range of 120 to 180°C. For each sample, using a Tensilon universal testing machine RTG-1310 (manufactured by A&D Co., Ltd.), and the unsealed 10 mm portions were respectively attached to the upper and lower chucks and pulled at 100 mm/min. At this time, regardless of the heat sealing temperature, samples with a strength greater than or equal to that of a laminate including a commercially available sealant film (Reference Example 3) were rated "Excellent", samples that had a strength less than that of the laminate of Reference Example 3 but broke were rated "Good", and samples in which interfacial peeling or cohesive failure occurred were rated "Poor".

(Elongation at break)

A sample measuring 15 mm × 25 mm was cut out from each laminate with the long side aligned in the machine direction, that is, the film forming direction. Each sample was set in a Tensilon universal testing machine RTG-1310 (manufactured by A&D Co., Ltd.) with an initial grip separation of 20 mm and pulled at 100 mm/s. Samples that exhibited an elongation greater than or equal to that of the laminate having a commercially available sealant film (Reference Example 3) were rated "Good", while those that exhibited an elongation less than that of the laminate of Reference Example 3 were rated "Poor".

(Appearance 4)

Evaluation laminates were obtained by laminating an adhesive layer, a PET film (manufactured by Toyobo Co., Ltd., E5202, 12 $\mu$m thick), an adhesive layer, a printed layer, and an Ny film (manufactured by Toyobo Co., Ltd. under the product name "HARDEN Film N1100", 15 $\mu$m thick) onto the vapor-deposited layer of each laminate obtained in the examples and comparative examples. On the other hand, a comparative laminate was obtained by forming a similar laminate structure on a commercially available sealant film (Reference Example 1). Evaluation laminates with a similar appearance (color) to the comparative laminate was rated "Good", while those with a different appearance (color) from the comparative laminate were rated "Poor".

(Appearance 5)

Evaluation laminates were obtained by laminating an adhesive layer, a 12-$\mu$m-thick polyethylene terephthalate (PET) film (manufactured by Toray Industries, Inc. under the product name "P60"), an adhesive layer, a printed layer, and an Ny film (manufactured by Toyobo Co., Ltd. under the product name "HARDEN Film N1100", 15 $\mu$m thick) onto the vapor-deposited layer of each laminate obtained in the examples and comparative examples. On the other hand, a comparative laminate was obtained by forming a similar laminate structure on a commercially available sealant film (Reference Example 1). Evaluation laminates with a similar appearance (surface smoothness (lack of irregularities)) to the comparative laminate were rated "Excellent", those having an appearance (surface smoothness (lack of irregularities)) inferior to that of the comparative laminate but presenting no problem for practical use were rated "Good", and those presenting problems for practical use were rated "Poor".

(Gas barrier performance)

The water vapor transmission rate (WVTR) of each laminate obtained in the examples and comparative examples was evaluated using a water vapor transmission rate measuring device manufactured by MOCON (product name: PERMATRAN 3/34G, measurement conditions: 40°C and 90% RH, unit: g/(m$^2$·day)). The measurement was performed in accordance with JIS K-7129-2: 2019. Samples were rated "Excellent" when the water vapor barrier performance was less than 3 g/(m$^2$·day), "Good" when it was 3 g/(m$^2$·day) or more and 5 g/(m$^2$·day) or less, and "Poor" when it was more than 5 g/(m$^2$·day).

[Table 12]

| | | | | Ex. F1 | Ex. F2 | Ex. F3 | Ex. F4 | Ex. F5 | Ex. F6 | Ex. F7 | Ex. F8 |
|---|---|---|---|---|---|---|---|---|---|---|---|
| Laminate | Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) | Recycled material 1 (100 mass%) | Recycled material 1 (100 mass%) |
| | | | Max area of low-transmitted-brightness domains ($\mu m^2$) | 800 | 1000 | 980 | 980 | 500 | 700 | 1000 | 1000 |
| | | | Max aspect ratio of low-transmitted-brightness domains | 10 | 10 | 10 | 10 | 7 | 10 | 10 | 10 |
| | | | Avg. brightness | 200 | 190 | 250 | 250 | 270 | 195 | 190 | 190 |
| | | | Brightness Std. Dev. | 10 | 12 | 8 | 8 | 8 | 13 | 12 | 12 |
| | | Sealant layer | Material | LLDPE | LLDPE | PP | LLDPE | LLDPE | LLDPE | LLDPE | LLDPE |
| | | Auxiliary layer | Material | - | - | - | - | - | - | LLDPE | EVOH |
| | Gas barrier layer | | Material | Aluminum vapor depositio n | Aluminum vapor depositio n | Aluminum vapor depositio n | Aluminum vapor depositio n | Aluminum vapor depositio n | Aluminum vapor depositio n | Aluminum vapor depositio n | Aluminum vapor depositio n |
| Evaluation | Heat sealing strength | | | Excellent | Excellent | Excellent | Good | Excellent | Excellent | Excellent | Excellent |
| | Elongation at break | | | Good | Good | Good | Good | Good | Good | Excellent | Excellent |
| | Appearance 4 | | | Good | Good | Good | Good | Good | Good | Good | Good |
| | Appearance 5 | | | Excellent | Good | Excellent | Excellent | Excellent | Good | Excellent | Excellent |
| | Gas barrier performance | | | Excellent | Good | Excellent | Good | Excellent | Excellent | Excellent | Excellent |

[Table 13]

| | | | | | Comp. Ex. F1 | Comp. Ex. F2 | Comp. Ex. F3 | Comp. Ex. F4 | Comp. Ex. F5 | Comp. Ex. F6 |
|---|---|---|---|---|---|---|---|---|---|---|
| Laminate | Sealant film | Recycled material-containing layer | | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) |
| | | | | Max area of low-transmitted-brightness domains ($\mu m^2$) | 1000 | 1100 | 1230 | 1230 | 1150 | 980 |
| | | | | Max aspect ratio of low-transmitted-brightness domains | 11 | 9 | 15 | 15 | 5 | 25 |
| | | | | Avg. brightness | 190 | 190 | 175 | 175 | 200 | 193 |
| | | | | Brightness Std. Dev. | 12 | 11 | 15 | 15 | 11 | 13 |
| | | Sealant layer | | Material | LLDPE | LLDPE | PP | LLDPE | LLDPE | LLDPE |
| | Gas barrier layer | | | Material | Aluminum vapor deposition | Aluminum vapor deposition | Aluminum vapor deposition | Aluminum vapor deposition | Aluminum vapor deposition | Aluminum vapor deposition |
| Evaluation | Heat sealing strength | | | | Poor | Poor | Poor | Poor | Poor | Poor |
| | Elongation at break | | | | Poor | Poor | Poor | Poor | Poor | Poor |
| | Appearance 4 | | | | Poor | Poor | Poor | Poor | Poor | Poor |
| | Appearance 5 | | | | Poor | Poor | Poor | Poor | Poor | Poor |
| | Gas barrier performance | | | | Good | Poor | Poor | Poor | Poor | Poor |

As shown in Table 12, the laminates of Examples F1 to F8 had a heat sealing strength and an elongation at break greater than or equal to those of a laminate having a commercially available sealant film, confirming that they have sufficient heat-sealability, mechanical properties, and gas barrier performance despite containing recycled materials.

Furthermore, according to the laminates of Examples F1 to F8, despite the recycled material containing a printed layer, laminates having an appearance better than or equal to laminates produced using commercially available sealant films can be obtained, which eliminates the need for materials and steps for providing additional layers to conceal appearance defects. This confirms that the present invention makes it possible to produce packaging materials that utilize recycled materials while reducing costs and environmental impact.

<Sealant Film and Laminate Preparation G>

(Example G1)

The recycled material 1 and an LLDPE (manufactured by Prime Polymer Co., Ltd. under the product name "Evolue SP2040") were charged into a weight ratio of 1:1 into a hopper for extruding the recycled material-containing layer, and the LLDPE (manufactured by Prime Polymer Co., Ltd. under the product name "Evolue SP2040") was charged into a hopper for extruding the sealant layer. Using a single-screw multilayer extruder, a recycled material-containing layer with a thickness of 80 $\mu$m and a sealant layer with a thickness of 20 $\mu$m were co-extruded to produce a sealant film. The screw rotation speed during extrusion of the recycled material-containing layer was set to 16 rpm, and narrowing of the flow path before the T-die was minimized to reduce the applied elongational stress.

Next, a solvent-free adhesive "TSN-4864A/TSN-4864B3" (manufactured by TOYO Morton) was applied to a silica-deposited PET film ("GL-RD", a 12-$\mu$m-thick silica-deposited PET film manufactured by TOPPAN Holdings Inc.) using a roll coater so that the coating amount would be 2 g/m$^2$, and this was bonded to the recycled material-containing layer of the sealant film to prepare a laminate.

(Example G2)

A sealant film was produced in the same manner as in Example G1, except that only the recycled material 1 was charged into the hopper for extruding the recycled material-containing layer. Then, a laminate was prepared in the same manner as in Example G1, except that this sealant film was used.

(Example G3)

A sealant film was produced in the same manner as in Example G2, except that the recycled material 2 was charged into the hopper for extruding the recycled material-containing layer instead of the recycled material 1, and a block polypropylene resin (bPP) (manufactured by Japan Polypropylene Corporation under the product name "Novatec PP BC6DRF") was charged into the hopper for extruding the sealant layer. Then, a laminate was prepared in the same manner as in Example G1, except that this sealant film was used.

(Example G4)

A sealant film was produced in the same manner as in Example G2, except that the recycled material 2 was charged into the hopper for extruding the recycled material-containing layer instead of the recycled material 1. Then, a laminate was prepared in the same manner as in Example G1, except that this sealant film was used.

(Example G5)

A sealant film was produced in the same manner as in Example G1, except that the recycled material 3 and an LLDPE (manufactured by Prime Polymer Co., Ltd. under the product name "Evolue SP2040") were charged into the hopper for extruding the recycled material-containing layer in a weight ratio of 1:1. Then, a laminate was prepared in the same manner as in Example G1, except that this sealant film was used.

(Example G6)

A sealant film was produced in the same manner as in Example G2, except that the recycled material 3 was charged into the hopper for extruding the recycled material-containing layer instead of the recycled material 1. Then, a laminate was prepared in the same manner as in Example G1, except that this sealant film was used.

(Example G7)

Only the recycled material 1 was charged into the hopper for extruding the recycled material-containing layer, an LLDPE (manufactured by Prime Polymer Co., Ltd. under the product name "Evolue SP2040") was charged into the hopper for extruding the sealant layer, and an LLDPE (manufactured by Prime Polymer Co., Ltd. under the product name "Evolue SP2040") was charged into the hopper for extruding the auxiliary layer. Using a single-screw multilayer extruder, an auxiliary layer with a thickness of 20 μm, a recycled material-containing layer with a thickness of 80 μm, and a sealant layer with a thickness of 20 μm were co-extruded in this order to produce a sealant film. The screw rotation speed during extrusion of the recycled material-containing layer was set to 16 rpm, and narrowing of the flow path before the T-die was minimized to reduce the applied elongational stress.

Next, a solvent-free adhesive "TSN-4864A/TSN-4864B3" (manufactured by TOYO Morton) was applied to a silica-deposited PET film ("GL-RD", a 12-μm-thick silica-deposited PET film manufactured by TOPPAN Holdings Inc.) using a roll coater so that the coating amount would be 2 g/m$^2$, and this was bonded to the auxiliary layer of the sealant film to prepare a laminate.

(Example G8)

A sealant film was prepared in the same manner as in Example G1. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G9)

A sealant film was prepared in the same manner as in Example G2. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G10)

A sealant film was prepared in the same manner as in Example G3. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G11)

A sealant film was prepared in the same manner as in Example G4. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G12)

A sealant film was prepared in the same manner as in Example G5. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G13)

A sealant film was prepared in the same manner as in Example G6. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Example G14)

A sealant film was prepared in the same manner as in Example G7. Then, a laminate was prepared in the same manner as in Example G1, except that instead of the inorganic solvent-based adhesive, the organic solvent-based adhesives "Takelac A626" and "Takenate A-50" (both manufactured by Mitsui Chemicals, Inc.) were mixed in a weight ratio of 8:1 and used.

(Reference Example 4)

A commercially available PE sealant film (manufactured by Tamapoly Co., Ltd. under the product name "MZ434") was prepared. Then, a laminate was prepared in the same manner as in Example G1, except that this sealant film was used.

(Comparative Example G1)

A sealant film was produced in the same manner as in Example G1, except that an orifice was inserted before the T-die to apply elongation stress when extruding the recycled material-containing layer. Then, a laminate was prepared in the same manner as in Example G1, except that this sealant film was used.

(Comparative Example G2)

A sealant film was produced in the same manner as in Example G2, except that the screw rotation speed was reduced to 10 rpm when extruding the recycled material-containing layer. Then, a laminate was prepared in the same manner as in Example G1, except that this sealant film was used.

(Comparative Example G3)

A sealant film was produced in the same manner as in Example G3, except that the screw rotation speed was reduced to 10 rpm, and an orifice was inserted before the T-die to apply elongation stress when extruding the recycled material-containing layer. Then, a laminate was prepared in the same manner as in Example G1, except that this sealant film was used.

(Comparative Example G4)

A sealant film was produced in the same manner as in Example G4, except that the screw rotation speed was reduced to 10 rpm, and an orifice was inserted before the T-die to apply elongation stress when extruding the recycled material-containing layer. Then, a laminate was prepared in the same manner as in Example G1, except that this sealant film was used.

(Comparative Example G5)

A sealant film was produced in the same manner as in Example G5, except that the screw rotation speed was reduced to 10 rpm when extruding the recycled material-containing layer. Then, a laminate was prepared in the same manner as in Example G1, except that this sealant film was used.

(Comparative Example G6)

A sealant film was produced in the same manner as in Example G6, except that an orifice was inserted before the T-die to apply elongation stress when extruding the recycled material-containing layer. Then, a laminate was prepared in the same manner as in Example G1, except that this sealant film was used.

<Analysis of Recycled Material-containing Layer>

The maximum area and maximum aspect ratio of the low-transmitted-brightness domains, and the average value and standard deviation of brightness were calculated in the same manner as described above.

<Evaluation of Sealant Film>

The sealant film produced in each of the examples and comparative examples was evaluated for heat seal strength and breaking strength in the same manner as described above.

<Laminate (Packaging Material) Evaluation>

The laminate (packaging material) produced in each of the examples and comparative examples was evaluated for as follows.

(Appearance 6)

The laminate of Reference Example 4 was used as a comparative laminate. The laminates obtained in the examples and comparative examples that had a similar appearance (color) to the comparative laminate was rated "Good", while those with a different appearance (color) from the comparative laminate were rated "Poor".

(Appearance 7)

Each laminate obtained in the examples and comparative examples was cut into a 100 mm square and evaluated based on the following criteria.

[Criteria]

Excellent: No bubbles with a diameter of 0.1 mm or more were observed.

Good: Bubbles with a diameter of 0.1 mm or more and less than 0.5 mm were observed.

Fair: Bubbles with a diameter of 0.5 mm or more and less than 1 mm were observed.

Poor: Bubbles with a diameter of 1 mm or more were observed.

[Table 14]

| | | | | Ex. G1 | Ex. G2 | Ex. G3 | Ex. G4 | Ex. G5 | Ex. G6 | Ex. G7 |
|---|---|---|---|---|---|---|---|---|---|---|
| Laminate | Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) | Recycled material 1 (100 mass%) |
| | | | Max area of low-transmitted-brightness domains ($\mu m^2$) | 800 | 1000 | 980 | 980 | 500 | 700 | 1000 |
| | | | Max aspect ratio of low-transmitted-brightness domains | 10 | 10 | 10 | 10 | 7 | 10 | 10 |
| | | | Avg. brightness | 200 | 190 | 250 | 250 | 270 | 195 | 190 |
| | | | Brightness Std. Dev. | 10 | 12 | 8 | 8 | 8 | 13 | 12 |
| | | Sealant layer | Material | LLDPE | LLDPE | PP | LLDPE | LLDPE | LLDPE | LLDPE |
| | | Auxiliary layer | Material | - | - | - | - | - | - | LLDPE |
| | Adhesive layer | | Material | Solvent-free adhesive | Solvent-free adhesive | Solvent-free adhesive | Solvent-free adhesive | Solvent-free adhesive | Solvent-free adhesive | Solvent-free adhesive |
| | Substrate film | | Material | Silica-deposited PET film | Silica-deposited PET film | Silica-deposited PET film | Silica-deposited PET film | Silica-deposited PET film | Silica-deposited PET film | Silica-deposited PET film |
| Evaluation | Heat sealing strength | | | Excellent | Excellent | Excellent | Good | Excellent | Excellent | Excellent |
| | Elongation at break | | | Good | Good | Good | Good | Good | Good | Excellent |
| | Appearance 6 | | | Good | Good | Good | Good | Good | Good | Good |
| | Appearance 7 | | | Excellent | Good | Excellent | Excellent | Excellent | Good | Excellent |

54

[Table 15]

| | | | | Ex. G8 | Ex. G9 | Ex. G10 | Ex. G11 | Ex. G12 | Ex. G13 | Ex. G14 |
|---|---|---|---|---|---|---|---|---|---|---|
| Laminate | Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) | Recycled material 1 (100 mass%) |
| | | | Max area of low-transmitted-brightness domains ($\mu m^2$) | 800 | 1000 | 980 | 980 | 500 | 700 | 1000 |
| | | | Max aspect ratio of low-transmitted-brightness domains | 10 | 10 | 10 | 10 | 7 | 10 | 10 |
| | | | Avg. brightness | 200 | 190 | 250 | 250 | 270 | 195 | 190 |
| | | | Brightness Std. Dev. | 10 | 12 | 8 | 8 | 8 | 13 | 12 |
| | | Sealant layer | Material | LLDPE | LLDPE | PP | LLDPE | LLDPE | LLDPE | LLDPE |
| | | Auxiliary layer | Material | - | - | - | - | - | - | LLDPE |
| | Adhesive layer | | Material | Solvent-based adhesive | Solvent-based adhesive | Solvent-based adhesive | Solvent-based adhesive | Solvent-based adhesive | Solvent-based adhesive | Solvent-based adhesive |
| | Substrate film | | Material | Silica-deposited PET film | Silica-deposited PET film | Silica-deposited PET film | Silica-deposited PET film | Silica-deposited PET film | Silica-deposited PET film | Silica-deposited PET film |
| Evaluation | Heat sealing strength | | | Excellent | Excellent | Excellent | Good | Excellent | Excellent | Excellent |
| | Elongation at break | | | Good | Good | Good | Good | Good | Good | Excellent |
| | Appearance 6 | | | Good | Good | Good | Good | Good | Good | Good |
| | Appearance 7 | | | Good | Fair | Good | Good | Good | Fair | Good |

[Table 16]

| | | | | Comp. Ex. G1 | Comp. Ex. G2 | Comp. Ex. G3 | Comp. Ex. G4 | Comp. Ex. G5 | Comp. Ex. G6 |
|---|---|---|---|---|---|---|---|---|---|
| Laminate | Sealant film | Recycled material-containing layer | Material | Recycled material 1 (50 mass%) LLDPE (50 mass%) | Recycled material 1 (100 mass%) | Recycled material 2 (100 mass%) | Recycled material 2 (100 mass%) | Recycled material 3 (50 mass%) LLDPE (50 mass%) | Recycled material 3 (100 mass%) |
| | | | Max area of low-transmitted-brightness domains ($\mu m^2$) | 1000 | 1100 | 1230 | 1230 | 1150 | 980 |
| | | | Max aspect ratio of low-transmitted-brightness domains | 11 | 9 | 15 | 15 | 5 | 25 |
| | | | Avg. brightness | 190 | 190 | 175 | 175 | 200 | 193 |
| | | | Brightness Std. Dev. | 12 | 11 | 15 | 15 | 11 | 13 |
| | | Sealant layer | Material | LLDPE | LLDPE | PP | LLDPE | LLDPE | LLDPE |
| | Adhesive layer | | Material | Solvent-free adhesive | Solvent-free adhesive | Solvent-free adhesive | Solvent-free adhesive | Solvent-free adhesive | Solvent-free adhesive |
| | Substrate film | | Material | Silica-deposited PET film | Silica-deposited PET film | Silica-deposited PET film | Silica-deposited PET film | Silica-deposited PET film | Silica-deposited PET film |
| Evaluation | | | Heat sealing strength | Poor | Poor | Poor | Poor | Poor | Poor |
| | | | Elongation at break | Poor | Poor | Poor | Poor | Poor | Poor |
| | | | Appearance 6 | Poor | Poor | Poor | Poor | Poor | Poor |
| | | | Appearance 7 | Poor | Poor | Poor | Poor | Poor | Poor |

As shown in Tables 14 and 15, the laminates of Examples G1 to G14 had a heat sealing strength and an elongation at break greater than or equal to the laminate with a commercially available sealant film, confirming that they have sufficient heat-sealability and mechanical properties despite containing recycled materials.

Furthermore, according to the laminates of Examples G1 to G14, despite the recycled material containing a printed layer, laminates having an appearance better than or equal to that of laminates produced using a commercially available sealant film can be obtained, which eliminates the need for materials and steps for providing additional layers to conceal appearance defects. Furthermore, it was confirmed that, despite containing recycled materials, the laminates of Examples G1 to G14 could sufficiently suppress bubble generation and had good appearance. This confirms that the present invention makes it possible to produce packaging materials that utilize recycled materials while reducing costs and environmental impact.

[Reference Signs List]

la, 1b ... Sealant film
2 ... Recycled material-containing layer
3 ... Sealant layer
4 ... Auxiliary layer
5 ... Adhesive layer
6 ... Substrate film
7 ... Printed layer
10a, 10b, 10c, 10d ... Laminate
12 ... Gas barrier layer
20 ... Low-transmitted-brightness domain (aggregate)
30 ... High-transmitted-brightness domain
100, 101, 102 ... Packaging material

## Claims

1.  A sealant film comprising:

    a recycled material-containing layer containing a recycled material that contains two or more types of resins; and
    a sealant layer laminated on one main surface of the recycled material-containing layer, wherein
    the recycled material-containing layer includes a domain whose transmitted brightness is lower than that of the surrounding domain when the sealant film is observed in plan view, and
    the domain has a maximum area of 1,000 $\mu m^2$ or less and a maximum aspect ratio of 10 or less.

2.  . The sealant film according to claim 1, wherein
    at least one of the recycled material-containing layer and the sealant layer contains a chemically recycled resin.

3.  . The sealant film according to claim 1, wherein
    the sealant film contains a polyethylene-based resin derived from biomass.

4.  . The sealant film according to claim 1, wherein
    the sealant film is subjected to electron beam irradiation treatment.

5.  . The sealant film according to claim 1, wherein
    the sealant film contains inorganic particles.

6.  . The sealant film according to claim 1, wherein
    the recycled material-containing layer has an average brightness value of 200 or more and a standard deviation of brightness of 10 or less in HSV color space data.

7.  . The sealant film according to claim 1, wherein
    the sealant layer contains the same type of resin as the resin with the highest content in the recycled material-containing layer.

8. . The sealant film according to claim 1, further comprising an auxiliary layer laminated on the other main surface of the recycled material-containing layer, wherein
the auxiliary layer contains the same type of resin as the resin with the highest content in the recycled material-containing layer.

9. . The sealant film according to claim 1, wherein
the resin with the highest content among the two or more types of resins contained in the recycled material is a polyethylene-based resin or a polypropylene-based resin.

10. . A laminate comprising:

the sealant film according to claim 1; and
a gas barrier layer provided on the surface of the sealant film opposite to the sealant layer side.

11. . A laminate comprising:

the sealant film according to claim 1;
an adhesive layer; and
a substrate film in this order.

12. . A packaging material comprising the sealant film according to any one of claims 1 to 9.

13. . The packaging material according to claim 12, wherein
the content of plastic material contained in the recycled material is 10% or more by mass, relative to the total amount of plastic material in the packaging material.

14. . A packaging bag obtained from the packaging material according to claim 12.

15. . A packaging bag obtained from the packaging material according to claim 13.

# FIG.1

FIG.2

FIG.3

FIG.4

FIG.5

FIG.6

FIG.7

FIG.8

FIG.9

FIG.10

FIG.11

FIG.12

## INTERNATIONAL SEARCH REPORT

| International application No. |
| --- |
| **PCT/JP2024/019567** |

**A. CLASSIFICATION OF SUBJECT MATTER**

*B32B 7/023*(2019.01)i; *B32B 27/00*(2006.01)i; *B65D 65/40*(2006.01)i
FI:   B32B7/023; B32B27/00 H; B65D65/40 A; B65D65/40 D BRH

According to International Patent Classification (IPC) or to both national classification and IPC

**B. FIELDS SEARCHED**

Minimum documentation searched (classification system followed by classification symbols)

B32B7/023; B32B27/00; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-113830 A (UBE INDUSTRIES, LTD.) 16 April 2002 (2002-04-16) claims, paragraphs [0017], [0028], examples | 1, 4-6, 9-11 |
| A | | 2-3, 7-8, 12-15 |
| X | JP 7-329262 A (MITSUBISHI CHEMICAL CORPORATION) 19 December 1995 (1995-12-19) paragraphs [0005], [0023], [0053], examples | 1, 4-6, 8-15 |
| A | | 2-3, 7 |
| A | WO 2022/069805 A1 (WOODLY OY) 07 April 2022 (2022-04-07) entire text | 1-15 |
| A | JP 5-32817 A (SUMITOMO BAKELITE CO., LTD.) 09 February 1993 (1993-02-09) entire text | 1-15 |
| A | JP 2002-248720 A (SUMIKA PLASTECH CO., LTD.) 03 September 2002 (2002-09-03) entire text | 1-15 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **25 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/019567**

| Patent document cited in search report | | | Publication date (day/month/year) | Patent family member(s) | | | Publication date (day/month/year) |
|---|---|---|---|---|---|---|---|
| JP | 2002-113830 | A | 16 April 2002 | (Family: none) | | | |
| JP | 7-329262 | A | 19 December 1995 | (Family: none) | | | |
| WO | 2022/069805 | A1 | 07 April 2022 | US | 2024/0017528 | A1 | |
| | | | | CN | 116209558 | A | |
| | | | | KR | 10-2023-0079387 | A | |
| JP | 5-32817 | A | 09 February 1993 | (Family: none) | | | |
| JP | 2002-248720 | A | 03 September 2002 | (Family: none) | | | |

Form PCT/ISA/210 (patent family annex) (July 2022)

**REFERENCES CITED IN THE DESCRIPTION**

**Patent documents cited in the description**

- WO 2022124229 A

- WO 2022158287 A

**Non-patent literature cited in the description**

- Plastic Materials in Molding Processing. The Japan Society of Plastics Processing. Morikita Publishing Co., Ltd., 2011, 335